# EUROPÄISCHE PATENTSCHRIFT

(11) **EP 1 245 627 B1**
(45) Veröffentlichungstag und Bekanntmachung des Hinweises auf die Patenterteilung: **04.07.2007**
(21) Anmeldenummer: 02003092.0
(22) Anmeldetag: 13.02.2002
(51) Int. Cl.: C08K 9/06, C08G 83/00, C08F 292/00, C09D 183/04, C09D 151/10, C09C 1/30, C09C 1/40, C09C 3/12

(54) **Siliciumorganische Nano-Mikrohybridsysteme oder Mikrohybridsysteme enthaltende Zusammensetzung für kratz- und abriebfeste Beschichtungen**
Organic silicon nano-microhybrid system or micro-hybrid system containing compositions for scratch and abrasion resistant coatings
Compositions pour revêtements résistantes aux rayures et à l'abrasion contenant des systèmes nano-microhybrides ou microhybrides à base de composés organiques de silice

(30) Priorität: 30.03.2001 DE 10116201; 25.08.2001 DE 10141690
(43) Veröffentlichungstag der Anmeldung: 02.10.2002
(73) Patentinhaber: Degussa GmbH, 40474 Düsseldorf (DE)
(72) Erfinder: Edelmann, Roland, 79664 Wehr (DE); Monkiewicz, Jaroslaw, Dr., 79618 Rheinfelden (DE); Mehnert, Reiner, Dr., 04416 Markkleeberg (DE); Gläsel, Hans-Jürgen, Dr., 04229 Leipzig (DE); Langguth, Helmut, Dr., 04103 Leipzig (DE)

(56) Entgegenhaltungen:
- EP-A- 0 659 786
- EP-A- 1 195 417
- US-A- 3 464 950

## Beschreibung

Die vorliegende Erfindung betrifft eine siliciumorganische Nano- bzw. Mikrohybridkapseln enthaltende Zusammensetzung für kratz- und abriebfeste Beschichtungen, wobei das siliciumorganische Nano-/Mikrohybridsystem bzw. Mikrohybridsystem aus kleinen metalloxidischen Kernen A und einer im Wesentlichen vollständigen, siliciumorganischen Umhüllung B besteht und die Zusammensetzung durch eine in situ durchgeführte Umsetzung von metalloxidischen Partikeln (KA-O) und mindestens einer organofunktionellen Siliciumverbindung, die eine organofunktionelle Gruppe und mindestens eine hydrolysierbare Gruppe bzw. mindestens eine Hydroxygruppe aufweist, in einem Kunstharz oder in einer Kunstharzvorläuferverbindung erhältlich ist. Weiterhin betrifft die vorliegende Erfindung die Verwendung solcher Zusammensetzungen als Lack für die Erzeugung einer kratzfesten und abriebfesten Beschichtung auf einem Substrat sowie entsprechend kratzfest und abriebfest beschichtete Artikel.

Es ist bekannt, die Oberflächeneigenschaften von Sol- oder Gelpartikeln oder von Metall- bzw. Halbmetalloxiden durch eine Behandlung mit einem hydrolysierbaren Organosilan oder Organosiloxan zu modifizieren, wobei in der Regel eine nur einlagige Silanschicht an das Oxid- bzw. Solgelpartikel anbindet. So behandelte Oxide bzw. Sol- oder Gelpartikel, beispielsweise anorganische Pigmente oder Füllstoffe, können in eine Polymermatrix eingebracht werden, insbesondere in Folien sowie in Beschichtungsmittel und damit erzeugbare Beschichtungen. In der Regel ist jedoch die Kratz- und Abriebfestigkeit solcher Polymersysteme gering.

DE 198 46 660 offenbart nanoskalige, oberflächenmodifizierte Oxid- bzw. Mischoxidpartikel, die von kovalent an das Oxidpartikel gebundenen siliciumorganischen Gruppen umhüllt sind, wobei die organofunktionellen Gruppen als reaktive Gruppen beschrieben werden und üblicherweise nach außen orientiert sind, sodass sie durch Polymerisation mit dem Polymermaterial beim Aushärten des Präpolymers in die Polymermatrix eingebunden werden. Das Herstellungsverfahren solcher Beschichtungsmittel ist aufwendig, da das Organosilan und die oxidische Komponente alternierend in das Präpolymer eingearbeitet werden.

DE 198 46 659 besitzt den selben Zeitrang wie DE 198 46 660 und betrifft einen Schichtwerkstoff, der mit einer kratzfesten Kunstharzschicht versehen ist, welche ebenfalls nanoskalige, oberflächenmodifizierte Oxidpartikel enthält. DE 198 46 659 lehrt speziell den Einsatz von Acryloxyalkylsilanen zur Erzeugung einer Umhüllung nanoskaliger Oxidpartikel, welche reaktive, strahlenvernetzbare Gruppen besitzt. Die Herstellung des Beschichtungsmittels erfolgt hier ebenfalls durch eine zeitaufwendige Umsetzung einer nanoskaligen Kieselsäure mit 3-Methacryloxypropyltrimethoxysilan (DYNASYLAN^{®} MEMO) in einer Acrylatformulierung in Gegenwart von Wasser, einer Säure sowie eines Netzmittels. Wiederum müssen die Komponenten in einer speziellen Reihenfolge alternierend zusammengebracht werden.

US 3,464,950 beschreibt Siloxanelastomere, welche Metalloxidpartikel enthalten, die ausgewählt sind aus der Gruppe, der Aluminiumoxide und Siliciumoxide.

Ferner beschreibt EP 0 659 786 A1 Kunststoffsanitärobjekte aus Gießharzen, welche Füllstoffe enthalten, die ausgewählt sind aus der Gruppe Aluminiumoxide, -hydroxide oder-oxidhydrate, Magnesiumhydroxide und Siliciumdioxide.

Besagte Beschichtungsmittel sind vielfach hochviskos und enthalten meist nur einen geringen Anteil an Oxidpartikeln, was sich auf die Kratzfestigkeit der späteren Beschichtung auswirkt. Auch ist es schwierig, solche hochviskosen Beschichtungsmittel auf ein Substrat aufzutragen, insbesondere wenn es sich um dünne, zerreißbare Substrate handelt. Oft ist die Kratz- und Abriebfestigkeit so erhältlicher Beschichtungen verbesserungswürdig. Bei solchen hochviskosen Systemen ist darüber hinaus eine spezielle aufwendige Auftragevorrichtung erforderlich. Häufig werden solchen hochviskosen Beschichtungsmitteln auch Lösungsmittel zugegeben, die zur Erhöhung der organischen Emissionen (VOC-Problematik, VOC = "flüchtige organische Verbindungen") führen.

Gemäß der Lehre der deutschen Patentanmeldungen 101 00 631.4 und 101 00 633.0 können im Wesentlichen kratzfeste (DIN 53799) Beschichtungen erzeugt werden. Leider können solche Beschichtungssysteme für Anwendungen bei denen nicht nur Kratzfestigkeit, sondern auch eine gute Abriebbeständigkeit (Haze nach DIN 52 347 / ASTM D-1044 und Abrieb nach DIN 68 861) erforderlich ist nicht eingesetzt werden, beispielsweise für Holzlackierungen, Kunststoff- und Parkettfußböden.
An einem handelsüblichen, abriebbeständigen PU-Lack kann man 2 mg Abrieb nach 50 Umdrehungen messen (Taber-Abraser-Test nach DIN 68 861).

Somit bestand die Aufgabe, eine Möglichkeit bereitzustellen, Beschichtungen auf Harzbasis möglichst kratz- und abriebfest auszustatten.

Die Aufgabe wird erfindungsgemäß entsprechend den Angaben der Patentansprüche gelöst.

Gefunden wurden Systeme auf der Basis siliciumorganischer Mikrohybridkapseln, nachfolgend auch Mikrohybridsysteme genannt, sowie Systeme, in denen siliciumorganische Nano- und Mikrohybridkapseln nebeneinander vorliegen, nachfolgend auch als siliciumorganische Nano-/Mikrohybridsysteme bezeichnet, bestehend aus oxidischen Partikeln (KA-O) mit (a) einem nanoskaligen Oxid und/oder Mischoxid als nanoskalige Kerne bzw. (b) einem mikroskaligen synthetischen Korund, insbesondere Plakor^{®} 13 (ESK-SIC GmbH, mittlerer Korndurchmesser 13 µm) als mikroskalige Kerne und jeweilig einer siliciumorganischen bzw. polymerisierbaren siliciumorganischen Umhüllung B, wobei die siliciumorganische Umhüllung B mindestens einen siliciumorganischen Bestandteil der allgemeinen Formel la

(Si'O-)ₓSi-R (Ia),

worin die Gruppen R gleich oder verschieden sind und R für eine organofunktionelle Gruppe, beispielsweise Alkyl, wie Methyl, Propyl, Butyl, Octyl, Perfluoralkyl, Tridecylfluor-1,1,2,2-tetrahydrooctyl, oder Alkenyl, wie Vinyl oder Allyl, oder Aryl, wie Phenyl oder Benzyl, oder Aminoalkyl, wie 3-Aminopropyl, N-(2-Aminoethyl)-3-aminopropyl, N'-(2-Aminoethyl)-N-(2-aminoethyl)-3-aminopropyl, Glycidyloxyalkyl, wie 3-Glycidyloxypropyl, oder Methacryloxyalkyl, wie 3-Methyacryloxypropyl, - um nur einige Beispiele zu nennen -, steht und x eine Zahl von 0 bis 20 ist, wobei die noch freien Valenzen von Si durch SiO- und/oder -Z und die freien Valenzen Si' durch SiO-, -R und/oder -Z gesättigt sind, die Gruppen Z gleich oder verschieden sind und Hydroxy- und/oder Alkoxy-Reste, beispielsweise Methoxy, Ethoxy, Propoxy, Butoxy, darstellen, und jedes Si bzw. Si' der Umhüllung B maximal eine Gruppe R trägt,
enthält und/oder der siliciumorganische Bestandteil der Umhüllung B über eine oder mehrere kovalente Bindungen der allgemeinen Formel Ib

(KA-O)-[(Si'O-)ₓ Si-R] (Ib)

worin die Gruppen R gleich oder verschieden sind und R die oben genannte Bedeutung besitzt und x eine Zahl von 0 bis 20 ist, wobei die noch freien Valenzen von Si durch (KA-O)-, SiO- und/oder -Z und die freien Valenzen von Si' durch (KA-O)-, SiO-, -R und/oder -Z gesättigt sind, die Gruppen Z gleich oder verschieden sind und Hydroxy- und/oder Alkoxy-Reste darstellen, und jedes Si bzw. Si' der Umhüllung B maximal eine Gruppe R trägt,
an den Kern A (KA-O) gebunden ist.

Ferner wurde gefunden, dass besagte siliciumorganische Nano-/Mikrohybridsysteme bzw. Mikrohybridsysteme in einfacher und wirtschaftlicher Weise direkt in einer Zusammensetzung auf der Basis eines härtbaren Kunstharzes oder einer Vorläuferverbindung eines härtbaren Kunstharzes bei ihrer Herstellung anfallen und eine entsprechende Zusammensetzung als Basis für einen Lack verwendet werden kann, welche nach Auftragen auf ein Substrat oder einen Artikel und anschließender Aushärtung in hervorragender Weise zu kratz- und abriebfesten Beschichtungen führt.

Unter einem härtbaren Kunstharz oder einer Vorläuferstufe eines härtbaren Kunstharzes, d. h. ein flüssiges Präpolymer oder ein Gemisch entsprechender Präpolymere, werden hier und nachfolgend zum Beispiel Acrylate, Methacrylate, Epoxid, Polyurethan, ungesättigte Polyester oder Mischungen daraus verstanden.

Ferner erhält man beim vorliegenden Verfahren im Wesentlichen vollständig und mehrschichtig siliciumorganisch umhüllte Oxidpartikel, d. h. Kerne A, die direkt in vorteilhafter Weise fein dispergiert in einem härtbaren Kunstharz oder einer Vorläuferstufe eines härtbaren Kunstharzes anfallen.

Nach der vorliegenden Verfahrensweise erhält man in der Regel das erfindungsgemäße siliciumorganische Mikrohybridsystem bzw. siliciumorganische Nano-/Mikrohybridsystem gleichzeitig in das Präpolymer homogen eingearbeitet.

So erhaltene Zusammensetzungen zeichnen sich durch eine überraschend vorteilhafte Verarbeitbarkeit bei Herstellung und Applikation aus, da die Praxis zeigt, dass trotz Korundanteil in der Zusammensetzung durch die siliciumorganische Umhüllung der Korundpartikel keine zusätzliche Abnutzung an den Misch- und Auftragsvorrichtungen festzustellen ist.

Ein dilatantes Verhalten von Lacken kann bei technischen Prozessen allgemein und speziell bei Beschichtungen mit den Speziallacken ein Problem darstellen. Im Allgemeinen strebt man bei solchen Beschichtungssystemen eine Viskosität bis 2 500 mPa s an. Vorzugsweise besitzen erfindungsgemäße lösemittelfreie Beschichtungsmittel eine Viskosität von > 500 bis 2 000 mPa s, besonders vorzugsweise von 800 bis 1 000 mPa s. Die Einstellung der Viskosität kann auch durch Verdünnen der Zusammensetzung mit einem Kunstharz oder einem entsprechenden Präpolymer erfolgen. Für einen Walzenauftrag sollte die Viskosität geeigneterweise im Bereich 0,8 bis 1,2 Pa s liegen.

Es wurde gefunden, dass neben einer gegebenenfalls anzuwendenden Verdünnung viskoser Zubereitungen bzw. Lacke und einem Temperaturregime bei der Beschichtung (typisch 60 °C) spezielle Lackzusätze die Viskosität der Dispersionen effektiv herabsetzen können. Mit Zusatz von z. B. 9 Ma-% einer Formulierung, wie z. B. DPGDA mit 30 Ma-% Aerosil OX 50 und 9 Ma-% DYNASYLAN VTMO, kann man das rheologische Verhalten einer hochdilatanten Dispersion bzw. Zusammensetzung weiter verbessern.

Besonders die Lacksysteme mit DYNASYLAN^{®} PTMO als Silankomponente können dilatantes Verhalten zeigen. Durch Verwendung von Mischungen DYNASYLAN® PTMO unter Zusatz von VTMO kann ein besonders günstiges rheologisches Verhalten erwartet werden.

Ebenfalls wurde gefunden, vorliegende Zusammensetzungen als Lack für die Erzeugung einer besonders kratz- und abriebfesten Beschichtung auf Substraten oder auf entsprechenden Artikeln zu verwenden.

Die Härtung der Beschichtung erfolgt geeigneterweise photochemisch durch UV-Bestrahlung oder durch Bestrahlung mit Elektronenstrahlen. Üblicherweise führt man die Bestrahlung bei einer Temperatur von 10 bis 60 °C, vorteilhaft bei Umgebungstemperatur, durch.

So kann man erfindungsgemäß in einfacher und wirtschaftlicher Weise mit siliciumorganische Nano-/Mikrohybridkapseln bzw. ausschließlich Mikrohybridkapseln enthaltenden Beschichtungsmitteln eine ausgezeichnete Kratz-und Abriebfestigkeit erzielen.

Gegenstand der vorliegenden Erfindung sind somit siliciumorganische Nano-/Mikrohybridsysteme oder Mikrohybridsysteme, bestehend aus Kernen A, wobei die Kerne A oxidische Partikel (KA-O) sind und ein Gemisch aus (a) mindestens einem nanoskaligen Oxid und/oder Mischoxid mindestens eines Metalls oder Halbmetalls der zweiten bis sechsten Hauptgruppe, der ersten bis achten Nebengruppe des Periodensystems der Elemente oder der Lanthanide mit einer mittleren Korngröße von 1 bis 200 nm und (b) einem mikroskaligen Korund mit einer mittleren Korngröße von 3 bis 40 µm darstellen und (a) und (b) in einem Gewichtsverhältnis von 1 : 10 bis 5 : 1 vorliegen, und einer siliciumorganischen Umhüllung B,
wobei die siliciumorganische Umhüllung B mindestens einen siliciumorganischen Bestandteil der allgemeinen Formel Ia

(Si'O-)ₓSi-R (Ia),

worin Gruppen R gleich oder verschieden sind und R für eine lineare, verzweigte oder cyclische Alkylgruppe mit 1 bis 50 C-Atomen, vorzugsweise mit 1 bis 20 C-Atomen, besonders bevorzugt mit 1 bis 16 C-Atomen, für eine Alkenylgruppe mit 2 bis 6 C-Atomen, für eine Fluoralkyl-, Chloralkyl-, Isocyanoalkyl-, Cyanoalkyl-, Aryl-, Acylalkyl-, Acryloxyalkyl-, Methacryloxyalkyl-, Polysulfanalkyl-, Mercaptoalkyl-, Thiacyamidalkyl-, Glycidyloxyalkyl-, Aminoalkyl-, Diaminoalkyl-, Triaminoalkyl-, Carbonatoalkyl- bzw. für eine Ureidoalkyl-Gruppe steht und x eine Zahl von 0 bis 20 ist, wobei die noch freien Valenzen von Si durch SiO- und/oder -Z und die freien Valenzen von Si' durch SiO-, -R und/oder -Z gesättigt sind, die Gruppen Z gleich oder verschieden sind und Hydroxy- oder Alkoxy-Reste darstellen, und jedes Si bzw. Si' der Umhüllung B maximal eine Gruppe R trägt,
enthält und/oder der siliciumorganische Bestandteil der Umhüllung B über eine oder mehrere kovalente Bindungen der allgemeinen Formel Ib

(KA-O)-[(Si'O-)ₓSi-R] (Ib)

worin Gruppen R gleich oder verschieden sind und R für eine lineare, verzweigte oder cyclische Alkylgruppe mit 1 bis 50 C-Atomen, für eine Alkenylgruppe mit 2 bis 6 C-Atomen, für eine Fluoralkyl-, Chloralkyl-, Isocyanoalkyl-, Cyanoalkyl-, Aryl-, Acylalkyl-, Acryloxyalkyl-, Methacryloxyalkyl-, Polysulfanalkyl-, Mercaptoalkyl-, Thiacyamidalkyl-, Glycidyloxyalkyl-, Aminoalkyl-, Diaminoalkyl-, Triaminoalkyl-, Carbonatoalkyl- bzw. für eine Ureidoalkyl-Gruppe steht und x eine Zahl von 0 bis 20 ist, wobei die noch freien Valenzen von Si durch (KA-O)-, SiO- und/oder -Z und die freien Valenzen von Si' durch (KA-O)-, SiO-, -R und/oder -Z gesättigt sind, die Gruppen Z gleich oder verschieden sind und Hydroxy- oder Alkoxy-Reste darstellen, und jedes Si bzw. Si' der Umhüllung B maximal eine Gruppe R trägt,
an einen Kern A (KA-O) gebunden ist.

Als Alkoxy-Reste der Gruppen Z sind solche mit einem lineare, cyclischen oder verzweigten Alkylrest mit 1 bis 18 C-Atomen bevorzugt, insbesondere sind Methoxy-, Ethoxy-, i- oder n-Propoxygruppen bevorzugt.

Bei erfindungsgemäßen siliciumorganischen Nano- bzw. Mikrohybridkapseln beträgt das Gewichtsverhältnis zwischen Kern A und Umhüllung B vorzugsweise 0,5 : 1 bis 100 : 1, besonders bevorzugt 1 : 1 bis 10 : 1, ganz besonders bevorzugt 2 : 1 bis 5 : 1.

Geeigneterweise besteht ein Kern A besagter siliciumorganischer Nanokapseln aus mindestens einem nanoskaligen Oxid und/oder Mischoxid , Oxidhydroxide sind hiermit eingeschlossen, aus der Reihe der Elemente Si, Al, Ti und/oder Zr, beispielsweise SiO₂, wie pyrogen hergestellte Kieselsäure, Silikate, Aluminiumoxid, Böhmit, Aluminiumhydroxid, Alumosilikate, TiO₂, Titanate, ZrO₂ oder Zirkonate. Ein Kern A einer Mikrohybridkapsel besteht in der Regel aus einem mikroskaligen Korundpartikel.

Erfindungsgemäße siliciumorganische Nano-/Mikrohybridsysteme oder Mikrohybridsysteme sind erhältlich durch eine Umsetzung von
(i) einem Oxidpartikelgemisch, das aus (a) mindestens einem nanoskaligen Oxid und/oder Mischoxid mindestens eines Metalls oder Halbmetalls der zweiten bis sechsten Hauptgruppe, der ersten bis achten Nebengruppe des Periodensystems der Elemente oder der Lanthanide mit einer mittleren Korngröße von 1 bis 200 nm und (b) einem mikroskaligen Korund mit einer mittleren Korngröße von 3 bis 40 µm besteht und (a) und (b) in einem Gewichtsverhältnis von 1 : 10 bis 5 : 1 vorliegen,
   mit
(ii) mindestens einem organofunktionellen Silan der allgemeinen Formel II

   R¹SiY₃ (II),

   worin R¹ eine lineare, verzweigte oder cyclische Alkylgruppe mit 1 bis 50 C-Atomen, eine Alkenylgruppe mit 2 bis 6 C-Atomen, eine Chloralkyl-, Isocyanoalkyl-, Cyanoalkyl-, Fluoralkyl-, Aryl-, Acylalkyl-, Acryloxyalkyl-, Methacryloxyalkyl-, Polysulfanalkyl-, Mercaptoalkyl-, Thiacyamidalkyl-, Glycidyloxyalkyl-, Aminoalkyl-, Diaminoalkyl-, Triaminoalkyl-, Carbonatoalkyl- oder eine Ureidoalkyl-Gruppe darstellt und Y für eine Methoxy-, Ethoxy-, i-Propoxy-, n-Propoxy- oder 2-Methoxyethoxy-Gruppe steht,
   oder 3-Chlorpropyltrichlorsilan, 1,4-Bis(3-triethoxysilylpropyl)-tetrasulfan, 1,2-Bis(3-triethoxysilylpropyl)-disulfan, Bis(3-ethoxysilylpropyl)-amin oder Tris(3-alkoxysilylpropyl)-amin
   und
(iii) gegebenenfalls einem monomeren und/oder oligomeren Kieselsäureester, der Methoxy-, Ethoxy-, n-Propoxy- oder i-Propoxygruppen trägt und einen mittleren Oligomerisierungsgrad von 1 bis 50 aufweist, beispielsweise Tetramethoxysilan, wie DYNASIL^{®} M, Tetraethoxysilan, wie DYNASIL^{®} A, Tetrapropoxysilan, wie DYNASIL^{®} P, oder ein oligomeres Ethylsilikat, wie DYNASIL^{®} 40,
   und
(iv) gegebenenfalls einem organofunktionellen Siloxan, dessen Funktionalitäten gleich oder verschieden sind und jedes Si-Atom im Siloxan eine Funktionalität aus der Reihe Alkyl, d. h. lineare, verzweigte oder cyclische mit 1 bis 20 C-Atomen, Fluoralkyl, Cyanoalkyl, Isocyanoalkyl, Alkenyl, Aminoalkyl, Diaminoalkyl, Triaminoalkyl, Alkoxyalkyl, Hydroxyalkyl, Acylalkyl, Glycidyloxyalkyl, Acryloxyalkyl, Methacryloxyalkyl, Mercaptoalkyl, Ureidoalkyl, Aryl oder Alkoxy trägt und die verbleibenden freien Valenzen der Si-Atome im Siloxan durch Methoxy- oder Ethoxy- oder Hydroxy-Gruppen gesättigt sind, bevorzugt sind solche Siloxane mit einem mittleren Oligomerisierungsgrad von 1 bis 20, vorzugsweise mit einem mittleren Oligomerisierungsgrad von 2 bis 10, wie sie insbesondere aus den deutschen Patentanmeldungen 199 55 047.6, 199 61 972.7, EP 0 518 057, EP 0 590 270, EP 0 716 127, EP 0 716 128, EP 0 760 372, EP 0 814 110, EP 0 832 911, EP 0 846 717, EP 0 846 716, EP 0 846 715, EP 0 953 591, EP 0 955 344, EP 0 960 921, EP 0 978 525, EP 0 930 342, EP 0 997 469, EP 1 031 593 und EP 0 075 697 zu entnehmen sind,
wobei die Umsetzung in situ in einem flüssigen, härtbaren Kunstharz oder einer Vorläuferstufe eines Kunstharzes erfolgt.

Hierbei setzt man erfindungsgemäß als Komponente (a) vorzugsweise mindestens ein nanoskaliges Oxid und/oder Mischoxid aus der Reihe der Elemente Si, Al, Ti und/oder Zr ein, wobei das nanoskalige Oxid bevorzugt eine mittlere Korngröße von 1 bis 200 nm aufweist. Besonders bevorzugt setzt man als Komponente (a) eine nanoskalige Kieselsäure ein.
Beim erfindungsgemäßen Verfahren kann man als oxidische Komponente (KA-O) ausschließlich mikroskaligen Korund (b) oder ein Oxidpartikelgemisch aus den Komponenten (a) und (b) einsetzen.

So wird als Komponente (b) ein mikroskaliger Korund (α-Al₂O₃) bevorzugt, wobei dieser vorzugsweise eine mittlere Korngröße von 3 bis 40 µm, besonders bevorzugt 9 bis 18 µm, ganz besonders bevorzugt 12 bis 15 µm, aufweist.

Weiterhin ist Gegenstand der vorliegenden Erfindung ein Verfahren zur Herstellung einer siliciumorganische Nano-/Mikrohybridsysteme oder Mikrohybridsysteme enthaltenden Zusammensetzung, das dadurch gekennzeichnet ist, dass man
(i) ein Oxidpartikelgemisch, das aus (a) mindestens einem nanoskaligen Oxid und/oder Mischoxid mindestens eines Metalls oder Halbmetalls der zweiten bis sechsten Hauptgruppe, der ersten bis achten Nebengruppe des Periodensystems der Elemente oder der Lanthanide mit einer mittleren Korngröße von 1 bis 200 nm und (b) einem mikroskaligen Korund mit einer mittleren Korngröße von 3 bis 40 µm besteht und ein Gewichtsverhältnis von (a) : (b) von 1 : 10 bis 5 : 1 aufweist,
   mit
(ii) mindestens einem organofunktionellen Silan der allgemeinen Formel II

   R¹SiY₃ (II),

   worin R¹ eine lineare, verzweigte oder cyclische Alkylgruppe mit 1 bis 50 C-Atomen, eine Alkenylgruppe mit 2 bis 6 C-Atomen, eine Chloralkyl-, Isocyanoalkyl-, Cyanoalkyl-, Fluoralkyl-, Aryl-, Acylalkyl-, Acryloxyalkyl-, Methacryloxyalkyl-, Polysulfanalkyl-, Mercaptoalkyl-, Thiacyamidalkyl-, Glycidyloxyalkyl-, Aminoalkyl-, Diaminoalkyl-, Triaminoalkyl-, Carbonatoalkyl- oder eine Ureidoalkyl-Gruppe darstellt, wobei die jeweilige Alkylen-Gruppen 1 bis 6 C-Atome enthält, und Y eine Methoxy-, Ethoxy-, i-Propoxy-, n-Propoxy- oder 2-Methoxyethoxy-Gruppe darstellt,
   oder 3-Chlorpropyltrichlorsilan, 1,4-Bis(3-triethoxysilylpropyl)-tetrasulfan, 1,2-Bis(3-triethoxysilylpropyl)-disulfan, Bis(3-ethoxysilylpropyl)-amin oder Tris(3-alkoxysilylpropyl)-amin
   und
(iii) gegebenenfalls einem monomeren und/oder oligomeren Kieselsäureester, der Methoxy-, Ethoxy-, n-Propoxy- oder i-Propoxygruppen trägt und einen mittleren Oligomerisierungsgrad von 1 bis 50 aufweist,
   und
(iv) gegebenenfalls einem organofunktionellen Siloxan, dessen Funktionalitäten gleich oder verschieden sind und jedes Si-Atom im Siloxan eine Funktionalität aus der Reihe Alkyl, Fluoralkyl, Cyanoalkyl, Isocyanoalkyl, Alkenyl, Aminoalkyl, Diaminoalkyl, Triaminoalkyl, Alkoxyalkyl, Hydroxyalkyl, Acylalkyl, Glycidyloxyalkyl, Acryloxyalkyl, Methacryloxyalkyl, Mercaptoalkyl, Ureidoalkyl, Aryl oder Alkoxy trägt und die verbleibenden freien Valenzen der Si-Atome im Siloxan durch Methoxy- oder Ethoxy- oder Hydroxy-Gruppen gesättigt sind,
   in situ in einem flüssigen, härtbaren Kunstharz oder einer Vorläuferstufe eines Kunstharzes umsetzt.

Im Allgemeinen führt man die besagte Umsetzung in einem beheizbaren Rührbehälter durch. Man kann aber auch andere Mischaggregate verwenden, insbesondere bei Systemen mit einem höheren Feststoffanteil, beispielsweise einen Konusmischer oder einen Kneter. Geeigneterweise kann man aber auch eine kombinierte Maschine zum Vordispergieren mittels Dissolverscheibe und anschließender Feinmahlung mittels Tauchmühle verwenden, wie sie beispielsweise unter dem Namen Torusmill^{®} von der Firma VMA-Getzmann GmbH angeboten wird.

Geeigneterweise verfährt man bei der Durchführung des erfindungsgemäßen Verfahrens so, dass man
- das härtbare Kunstharz oder eine Vorläuferstufe eines härtbaren Kunstharzes vorlegt und erwärmt,
- Katalysator, gegebenenfalls Netzmittel und Wasser zugibt,
- Komponenten (ii) bis (iv) einbringt und anschließend
- die oxidische Komponente (i) unter guter Durchmischung zusetzt.

Vorzugsweise setzt man beim erfindungsgemäßen Verfahren als härtbares Kunstharz oder Vorläuferstufe eines härtbaren Kunstharzes ein Acrylat, Methacrylat, Epoxid, Epoxidharz, Polyurethan, Polyurethanharz, ungesättigte Polyester, ungesättigtes Polyesterharz, Epoxyacrylat, Polyesteracrylat, Urethanacrylat, Siliconacrylate oder Gemische aus zwei oder mehreren der zuvor genannten Komponenten ein.

Insbesondere, aber nicht ausschließlich kann man als organofunktionelle Silane gemäß Formel II folgende Verbindungen einsetzen: Methyltrimethoxysilan (DYNASYLAN^{®} MTMS), Methyltriethoxysilan (DYNASYLAN^{®} MTES), Propyltrimethoxysilan (DYNASYLAN^{®} PTMO), Propyltriethoxysilan (DYNASYLAN^{®} PTEO), i-Butyltrimethoxysilan (DYNASYLAN^{®} IBTMO), i-Butyltriethoxysilan (DYNASYLAN^{®} IBTEO), Octyltrimethoxysilan (DYNASYLAN^{®} OCTMO), Octyltriethoxysilan (DYNASYLAN^{®} OCTEO), Hexadecyltrimethoxysilan (DYNASYLAN^{®} 9116), Hexadecyltriethoxysilan (DYNASYLAN^{®} 9216), 3-Chlorpropyltrialkoxysilane, 3-Brompropylalkoxysilane, 3-Jodpropylalkoxysilane, 3-Chlorpropyltrichlorsilane, 3-Aminopropyltrialkoxysilane, u. a. 3-Aminopropyltrimethoxysilan (DYNASYLAN^{®} AMMO), 3-Aminopropyltriethoxysilan (DYNASYLAN^{®} AMEO), N-(n-Butyl)-3-aminopropyltrimethoxysilan (DYNASYLAN^{®} 1189), N-Aminoethyl-3-aminopropyltrimethoxysilan (DYNASYLAN^{®} DAMO), triaminofunktionelles Propyltrimethoxysilan (DYNASYLAN^{®} TRIAMO), u. a. [N-Aminoethyl-N'-(3-trialkoxysilylpropyl)]ethylen-diamine sowie [N-Aminoethyl-N-(3-trialkoxysilylpropyl)]ethylendiamine, triaminofunktionelle Propylmethyldialkoxysilane, 3-(4,5-Dihydroimidazolyl)propyltriethoxysilan (DYNASYLAN^{®} IMEO), 3-Methacryloxypropylalkoxysilane, 3-Methacryloxypropyltrimethoxysilan (DYNASYLAN^{®} MEMO), 3-Methacryloxyisobutyltrialkoxysilane, 3-Glycidyloxypropyltrialkoxysilane, 3-Glycidyloxypropyltrimethoxysilan (DYNASYLAN^{®} GLYMO), 3-Glycidyloxypropyl-methyldiethoxysilan, 3-Mercaptopropylalkoxysilane, 3-Mercaptopropyltrimethoxysilan (DYNASYLAN^{®} MTMO), Vinyltrialkoxysilane, u. a. Vinyltrimethoxysilan (DYNASYLAN^{®} VTMO), Vinyltriethoxysilan (DYNASYLAN^{®} VTEO), Vinyltris(2-methoxyethoxy)silan (DYNASYLAN^{®} VTMOEO), Perfluoralkyltrialkoxysilane, Fluoralkyltrialkoxysilane, u. a. Tridecafluoroctyltrimethoxysilan, Tridecafluoroctyltriethoxysilan (DYNASYLAN^{®} F 8261), (H₅C₂O)₃Si(CH₂)₃-S₄-(CH₂)₃Si(OC₂H₅)₃ 1,4-Bis(3-triethoxysilylpropyl)-tetrasulfan (Si-69), (H₅C₂O)₃Si(CH₂)₃-NCS 3-Thiacyamidopropyltriethoxysilan (Si-264), (H₅C₂O)₃Si(CH₂)₃-S₂-(CH₂)₃Si(OC₂H₅)₃ 1,2-Bis(3-triethoxysilylpropyl)disulfan (Si-266), 3-Cyanopropyltrialkoxysilane, u. a. 3-Cyanopropyltrimethoxysilan, N,N',N"-Tris(trimethoxysilyl-propyl)triisocyanurat, 3-[Methoxy(polyethylenglycid)]propyltrialkoxysilane, Allyltrialkoxysilane, 3-Methacryloxy-2-methylpropyltrialkoxysilane, 3-Amino-2-methylpropyl-trialkoxysilane, (Cyclohex-3-enyl)-ethyltrialkoxysilane, N-(3-Trialkoxysilylpropyl) alkylcarbamate, 3-Azidopropyltrialkoxysilane, 4-(2-Trialkoxysilylethyl)-1,2-epoxy-cyclohexane, Bis(3-alkoxysilylpropyl)amine, Tris(3-alkoxysilylpropyl)amine, 3-Acryloxypropyltrialkoxysilane, wobei für eine der zuvor genannten Alkoxygruppen vorteilhaft Methoxy, Ethoxy, 2-Methoxyethoxy, Propoxy oder Acetoxy steht.

Besonders bevorzugt setzt man erfindungsgemäß als Komponente (ii) 3-Methacryloxypropyltrimethoxysilan, 3-Methacryloxypropyltriethoxysilan, 3-Methacryl-oxy-2-methyl-propyltrimethoxysilan, 3-Methacryloxy-2-methyl-propyltriethoxysilan, Vinyltrimethoxysilan, Vinyltriethoxysilan, n-Propyltrimethoxysilan und/oder n-Propyltriethoxysilan ein.

Geeigneterweise legt man beim erfindungsgemäßen Verfahren die in der Regel flüssigen Komponenten des Präpolymeren vor und erwärmt, gibt eine definierte Menge Wasser, gegebenenfalls Katalysator, gegebenenfalls Netzmittel sowie die siliciumorganischen Komponenten (ii) bis (iv) zu und bringt im Anschluss daran die oxidische Komponente (i) unter guter Durchmischung ein. D. h., geeigneterweise bringt man zunächst die Kunstharzkomponenten, Katalysator, Netzhilfsmittel, Wasser und die siliciumorganischen Komponenten, gegebenenfalls weitere Hilfsstoffe, z. B. Stabilisator, zusammen, mischt und erst dann setzt man die oxidische Komponente (i) zu, wobei sich ein nach dieser Herstellweise erhaltenes Komponentengemisch insbesondere auch durch ein gutes Verarbeitungsverhalten auszeichnet.

Bevorzugt setzt man beim erfindungsgemäßen Verfahren 0,1 bis 80 Gew.-%, vorzugsweise 5 bis 70 Gew.-%, besonders bevorzugt 15 bis 50 Gew.-%, ganz besonders bevorzugt 20 bis 40 Gew.-%, insbesondere ≤ 60 Gew.-%, oxidische Komponente (i) (KA-O), bezogen auf das Kunstharz, ein.

Setzt man beim vorliegenden Verfahren ein Oxidpartikelgemisch aus (a) und (b) als oxidische Komponente (i) ein, so bevorzugt man ein Gewichtsverhältnis von (a): (b) von 1 : 10 bis 5 : 1. Besonders bevorzugt setzt man ein Oxidpartikelgemisch mit einem Gewichtsverhältnis der Komponenten (a) und (b) von 1: 3 bis 1 : 1, ganz besonders bevorzugt eines von 1 : 2, ein.

Vorzugsweise setzt man beim erfindungsgemäßen Verfahren ein nanoskaliges Oxid und/oder nanoskaliges Mischoxid (a) mit einem durchschnittlichen Partikeldurchmesser von 1 bis 100 nm, besonders vorzugsweise von 5 bis 50 nm und ganz besonders vorzugsweise von 10 bis 40 nm, ein. Dabei können die Oxide bzw. Mischoxide (a) eine BET-Oberfläche von 40 bis 400 m²/g, vorzugsweise von 60 bis 250 m²/g, besonders vorzugsweise von 80 bis 250 m²/g, besitzen. Als nanoskalige Oxide oder Mischoxide (a) kann man beispielsweise - aber nicht ausschließlich - pyrogene Kieselsäure, die durch weitere Metall- oder Halbmetallanteile modifiziert sein kann, wie Aluminium, Titan, Eisen oder Zirkon, einsetzen.

Als oxidische Komponente (b) setzt man vorzugsweise ein mikroskaliges Korund mit einer mittleren Korngröße d₅₀ von 9 bis 15 µm ein.

Ferner ist bevorzugt, dass man die oxidische Komponente (i), bestehend aus den Einzelkomponenten (a) und (b) bzw. aus (b), und mindestens eine silanbasierende Komponente, insbesondere (ii), (iii) und/oder (iv), in einem Gewichtsverhältnis von 100 : 1 bis 0,5 : 1, besonders bevorzugt von 10 bis 1 : 1, ganz besonders bevorzugt von 5 bis 2 : 1, einsetzt.

Als flüssiges bzw. härtbares Kunstharz oder als Vorläuferstufe eines flüssigen, härtbaren Kunstharzes, d. h. einem Präpolymer oder einem Gemisch aus Präpolymeren, verwendet man beim erfindungsgemäßen Verfahren beispielsweise Acrylate, Methacrylate, Epoxide, Epoxidharze, Polyurethane, Polyurethanharze, ungesättigte Polyester, ungesättigte Polyesterharze, Epoxyacrylate, Polyesteracrylate, Urethanacrylate, Siliconacrylate, polyfunktionelle monomere Acrylate, wie Trimethylolpropantriacrylat, Trimethylolpropantrimethacrylat, ethoxyliertes Trimethylolpropantriacrylat, propoxyliertes Trimethylolpropantriacrylat, Pentaerythrittriacrylat, ethoxyliertes Pentaerythritoltetraacrylat, alkoxylierte Tetraacrylate, Di-trimethylolpropantetraacrylate, 3,4-Epoxycyclohexan-1-carbonsäure-3,4-epoxycyclohexyl-1'-methylester, 1,6-Hexandioldiacrylat - um nur einige Beispiele zu nennen - oder Gemische aus zwei oder mehreren der zuvor genannten Kunstharze bzw. Präpolymeren, beispielsweise Gemische aus mono- und/oder bifunktionellen bzw. polyfunktionellen monomeren, gegebenenfalls niedrigviskosen Acrylaten.

Die erfindungsgemäße Umsetzung erfolgt in der Regel in Gegenwart einer wohl definierten Menge an Wasser. Geeigneterweise setzt man dazu pro Mol Si der siliciumorganischen Komponenten 1 bis 6 Mol Wasser ein.

Vorzugsweise erfolgt beim vorliegenden Verfahren die besagte Umsetzung in Gegenwart definierter Mengen Wasser. Bevorzugt setzt man pro Mol einer hydrolysierbaren, Si-gebundenen Gruppe der siliciumorganischen Komponenten 0,5 bis 6 Mol Wasser, besonders bevorzugt 0,5 bis 4 Mol Wasser, ganz besonders bevorzugt 1 bis 2,0 Mol Wasser, ein.

Ferner wird die erfindungsgemäße Umsetzung bevorzugt in Gegenwart eines Katalysators durchgeführt. Als Katalysator ist insbesondere eine Säure geeignet, vorzugsweise Maleinsäureanhydrid, Maleinsäure, Essigsäure, Essigsäureanhydrid, Glycolsäure, Zitronensäure, Methansulfonsäure, Phosphorsäure.

Weiterhin kann der Einsatz eines Netzmittels für die Durchführung der erfindungsgemäßen Umsetzung hilfreich sein. So führt man die Umsetzung vorzugsweise in Gegenwart von Natriumdodecylsulfat durch.

Beim erfindungsgemäßen Verfahren wird die Umsetzung bevorzugt bei einer Temperatur im Bereich von 30 bis 100 °C, vorzugsweise bei einer Temperatur im Bereich von 50 bis 80 °C, durchgeführt.

Durch Hydrolyse und Kondensation entsteht bei der erfindungsgemäßen Umsetzung in der Regel ein Alkohol, den man vorzugsweise während der Umsetzung und/oder danach aus dem Reaktionssystem entfernt. Das Entfernen des bei der Umsetzung entstandenen Alkohols kann destillativ, geeigneterweise unter vermindertem Druck, durchgeführt werden. In der Regel wird dabei der Gehalt an Alkohol im Produktgemisch, d. h. in der durch die erfindungsgemäße Umsetzung erhaltenen Zusammensetzung, auf <2 Gew.-%, vorzugsweise auf 0,01 bis 1 Gew.-%, besonders vorzugsweise auf 0,1 bis 0,5 Gew.-%, abgesenkt, sodass man in vorteilhafter Weise eine lösemittelfreie Zusammensetzung, d. h. eine lösemittelfreie Lackbasis bzw. einen lösemittelfreien Lack erhält.

Solche erfindungsgemäßen Zusammensetzungen können direkt oder nach Zugabe weiterer Lackkomponenten in hervorragender Weise für die kratzfeste Beschichtung von Substraten verwendet werden.

Das Beschichten eines Substrats mit der vorliegenden Zusammensetzung kann in der Regel aufgrund der geringen Viskosität der Zusammensetzung mit vergleichsweise geringem Aufwand erfolgen.

Weiterhin ist Gegenstand der vorliegenden Erfindung eine Zusammensetzung oder ein Lack auf der Basis eines aushärtbaren Kunstharzes, die nach mindestens einem der Ansprüche 1 bis 16 erhältlich ist.

Erfindungsgemäße Zusammensetzungen verwendet man insbesondere als Lack oder als Basiskomponente für die Herstellung einer Beschichtungszusammensetzung oder eines Lacks zur Erzeugung kratz- und abriebfester Beschichtungen.

Im Allgemeinen kann man erfindungsgemäße Zusammensetzungen für Beschichtungszwecke einsetzen und radikalisch, thermisch und/oder photo- bzw. strahlenchemisch härten.

Geeigneterweise kann man der erfindungsgemäßen Zusammensetzung bzw. dem erfindungsgemäßen Lack weitere Komponenten zusetzen, beispielsweise Initiatoren für die UV- bzw. photo- oder strahlenchemische Lackhärtung, Darocur^{®} 1173, Lucirin^{®} TPO-L, Lackstabilisatoren, wie HALS-Verbindungen, Tinuvine^{®} sowie Antioxidantien, wie Irganox^{®}. Solche Zusatzstoffe werden in der Regel in Mengen von 0,1 bis 5 Gew.-%, vorzugsweise von 0,5 bis 2 Gew.-%, bezogen auf die Zubereitung bzw. den Lack, eingesetzt. Das Einbringen weiterer Komponenten in das Lacksystem erfolgt geeigneterweise unter guter Durchmischung. Die erfindungsgemäßen Zubereitungen bzw. Lacke zeichnen sich vorteilhaft trotz eines hohen Gehalts an polymerisierbaren siliciumorganischen Nanokapseln vorzugsweise durch eine vergleichsweise geringe Viskosität von 500 bis 1 000 mPa s aus. Dabei verhalten sich die Systeme in der Regel dilatant.

Somit ist auch Gegenstand der Erfindung die Verwendung einer erfindungsgemäßen Zusammensetzung als Lack oder als Basis für die Herstellung einer Beschichtungszusammensetzung oder eines Lacks zur Erzeugung kratz- und abriebfester Beschichtungen.

Die Applikation der erfindungsgemäßen Zusammensetzung bzw. eines erfindungsgemäßen Lacks erfolgt in der Regel durch Aufbringen auf ein Substrat. Für die Beschichtung von Substraten kann man die üblichen Beschichtungsverfahren anwenden, wie z. B. Walzenauftrag, Aufrakeln, Tauchen, Fluten, Gießen, Spritzen, Aufstreichen.

Beispielsweise kann man die erfindungsgemäße Zubereitung bzw. den Lack auf bahnförmige Substrate, wie Papier oder Metall- bzw. Kunststofffolien, durch Einsatz eines Walzauftragswerks gleichmäßig auftragen und anschließend härten. Geeigneterweise kann man die Beschichtung bei Umgebungstemperatur, d. h. Lacktemperatur, durch ein UV- oder Elektronenstrahlverfahren (ESH) umweltfreundlich, da lösemittelfrei, aushärten.

Bevorzugt erzeugt man für die Elektronenstrahl-Härtung Elektronen mit einer Energie von rd. 140 keV, wobei die Dosis bei 30 bis 60 kGy, vorzugsweise 40 bis 50 kGy, liegt. Vorzugsweise liegt der O₂-Restgehalt bei < 200 ppm. Geeigneterweise führt man die photochemische Härtung unter Schutzgas aus, beispielsweise unter Stickstoff oder Argon.

Man kann die Lackhärtung aber auch mittels UV-Bestrahlung durch Einsatz von mono- oder polychromatischen UV-Lampen mit einer Wellenlänge von 150 bis 400 nm durchführen. Auch bei der UV-Härtung kann man bei Umgebungstemperatur, beispielsweise zwischen 10 und 60 °C, arbeiten. Auch hierbei liegt der O₂-Gehalt geeigneterweise bei < 200 ppm.

So kann man durch den Einsatz erfindungsgemäßer Zusammensetzungen bzw. Lacke in besonders vorteilhafter Weise hervorragend kratz- und abriebfeste Beschichtungen erzeugen. Die Bestimmung der Ritzhärte bzw. Kratzfestigkeit erfolgt hier in der Regel gemäß DIN 53 799 unter Verwendung einer Hartmetallkugel. Der Abrieb kann beispielsweise nach DIN 52 347 unter Einsatz beschichteter Planscheiben erfolgen.

Man kann eine erfindungsgemäße Zusammensetzung oder einen erfindungsgemäßen Lack auf einen Untergrund bzw. ein Substrat aufbringen und die Beschichtung chemisch, beispielsweise oxidativ, aushärten, beispielsweise durch Einsatz von Peroxid und höherer Temperatur.

Gegenstand der vorliegenden Erfindung sind daher kratz- und abriebfeste Beschichtungen, die erhältlich sind durch Aufbringen und Aushärten einer erfindungsgemäßen Zusammensetzung oder eines erfindungsgemäßen Lacks nach den Ansprüchen 18 oder 19.

Erfindungsgemäße Beschichtungen weisen vorzugsweise eine Schichtdicke von 20 bis 200 µm, besonders bevorzugt von 5 bis 50 µm und ganz besonders bevorzugt von 5 bis 20 µm, auf.

So kann man in besonders einfacher und wirtschaftlicher Weise beispielsweise Metalle, wie Aluminium, Eisen, Stahl, Messing, Kupfer, Silber, Magnesium, Leichtmetalllegierungen, Holz, Papier, Pappe, Textilien, Steinwaren, Kunststoffe, Thermoplaste, Polycarbonat, Glas, Keramik, mit einer besonders kratz- und abriebfesten Beschichtung ausstatten. Die Auswahl der im Wesentlichen festen Substratmaterialien zur Beschichtung ist uneingeschränkt. Solche Substrate können beispielsweise mit einer Schutzbeschichtung ausgestattet werden, so genanntes "Topcoating", wie es beispielsweise als Klarlacksystem in der Automobilindustrie angewendet wird.

Insbesondere sind nach dem vorliegenden Beschichtungsverfahren in einfacher und wirtschaftlicher Weise kratzfest ausgestattete Artikel, wie Dekorpapier, Aluminiumfolien, Polycarbonat-Autoscheiben, PVC-Fensterrahmen, Türen, Arbeitsplatten, Fußbodenbeläge, Parkettböden, um nur einige zu nennen, erhältlich.

Weiterhin sind Gegenstand der vorliegenden Erfindung Artikel mit einer erfindungsgemäßen Beschichtung, die nach einem der Ansprüche 18 bis 20 erhältlich sind.

Die vorliegende Erfindung wird durch die nachfolgenden Beispiele näher erläutert:

### Beispiele

### Einsatzstoffe:

Ebecryl^{®} EB 5129: Gemisch aus aliphatischem Urethanhexaacrylat und Pentaerythritoltri/tetraacrylat der Firma UCB Chemicals.
Ebecryl^{®} EB 1290: hexafunktionelles aliphatisches Urethanacrylat der Firma UCB Chemicals
DPGDA: Dipropylenglycoldiacrylat der Firma UCB Chemicals.
HDDA: 1.6-Hexandioldiacrylat der Firma UCB Chemicals.
Sartomer^{®} SR 494: ethoxyliertes Pentaerythritoltetraacrylat der Firma Cray Valley.
DYNASYLAN^{®} VTMO: Vinyltrimethoxysilan der Firma DEGUSSA AG.
DYNASYLAN^{®} PTMO: Propyltrimethoxysilan der Firma DEGUSSA AG
DYNASYLAN^{®} MEMO: Methacryloxypropyltrimethoxysilan der Firma DEGUSSA AG
Plakor^{®} 13: synthetischer Korund (Korund-Mikropulver, d₅₀ = 13 µm) der Firma ESK-SIC GmbH.
Aerosil^{®} OX 50: pyrogene Kieselsäure (amorph, BET = 50 m²/g, d₅₀ = 30 nm)
Aerosil^{®} 200: pyrogene Kieselsäure (amorph, BET = 200 m²/g, d₅₀ = 30 nm)

### Beispiel 1

In einem Rührgefäß werden 19,49 kg EB 5129 und 3,71 kg DPGDA sowie 48 g 4-Hydroxyanisol vorgelegt und auf 65 bis 70 °C erwärmt. Zum erwärmten Acrylat werden eine Lösung von 0,15 kg Maleinsäureanhydrid in 1,364 kg Wasser sowie innerhalb von 30 Minuten 4,988 kg DYNASYLAN^{®} VTMO gegeben. Anschließend dosiert man im oben angegebenen Temperaturbereich unter intensiven Rühren 11,13 kg Plakor^{®} 13 und 5,57 kg Aerosil^{®} OX 50 innerhalb von einer Stunde. Man rührt noch 1 Stunde bei 65 bis 70 °C weiter und destilliert dann im Vakuum das durch die Hydrolyse des Silans entstandene Methanol ab. Zuletzt wird der Ansatz auf Raumtemperatur abgekühlt.

### Beispiel 2

In einem Rührgefäß werden 19,49 kg EB 1290 und 3,71 kg HDDA sowie 48 g 4-Hydroxyanisol vorgelegt und auf 65 bis 70 °C erwärmt. Zum erwärmten Acrylat werden eine Lösung von 0,15 kg Maleinsäureanhydrid in 1,364 kg Wasser sowie innerhalb von 30 Minuten 4,988 kg DYNASYLAN^{®} VTMO gegeben. Anschließend dosiert man im oben angegebenen Temperaturbereich unter intensiven Rühren 11,13 kg Plakor^{®} 13 und 5,57 kg Aerosil^{®} OX 50 innerhalb von einer Stunde. Man rührt noch 1 Stunde bei 65 bis 70 °C weiter und destilliert dann im Vakuum das durch die Hydrolyse des Silans entstandene Methanol ab. Zuletzt wird der Ansatz auf Raumtemperatur abgekühlt.

### Beispiel 3

In einem Rührgefäß werden 19,49 kg EB 1290 und 3,71 kg HDDA sowie 48 g 4-Hydroxyanisol vorgelegt und auf 65 bis 70 °C erwärmt. Zum erwärmten Acrylat werden eine Lösung von 0,15 kg Maleinsäureanhydrid in 1,364 kg Wasser sowie innerhalb von 30 Minuten 4,988 kg DYNASYLAN^{®} VTMO gegeben. Anschließend dosiert man im oben angegebenen Temperaturbereich unter intensiven Rühren 5,57 kg Plakor^{®} 13 und 11,13 kg Aerosil^{®} OX 50 innerhalb von einer Stunde. Man rührt noch 1 Stunde bei 65 bis 70 °C weiter und destilliert dann im Vakuum das durch die Hydrolyse des Silans entstandene Methanol ab. Zuletzt wird der Ansatz auf Raumtemperatur abgekühlt.

### Beispiel 4

In einem Rührgefäß werden 15,78 kg EB 1290 und 7,43 kg HDDA sowie 48 g 4-Hydroxyanisol vorgelegt und auf 65 bis 70 °C erwärmt. Zum erwärmten Acrylat werden eine Lösung von 0,15 kg Maleinsäureanhydrid in 1,364 kg Wasser sowie innerhalb von 30 Minuten 4,988 kg DYNASYLAN^{®} VTMO gegeben. Anschließend dosiert man im oben angegebenen Temperaturbereich unter intensiven Rühren 6,96 kg Plakor^{®} 13 und 9,74 kg Aerosil^{®} OX 50 innerhalb von einer Stunde. Man rührt noch 1 Stunde bei 65 bis 70 °C weiter und destilliert dann im Vakuum das durch die Hydrolyse des Silans entstandene Methanol ab. Zuletzt wird der Ansatz auf Raumtemperatur abgekühlt.

### Beispiel 5

In einem Rührgefäß werden 15,78 kg EB 1290 und 7,43 kg DPGDA sowie 48 g 4-Hydroxyanisol vorgelegt und auf 65 bis 70 °C erwärmt. Zum erwärmten Acrylat werden eine Lösung von 0,15 kg Maleinsäureanhydrid in 1,364 kg Wasser sowie innerhalb von 30 Minuten 4,988 kg DYNASYLAN^{®} VTMO gegeben. Anschließend dosiert man im oben angegebenen Temperaturbereich unter intensiven Rühren 6,96 kg Plakor^{®} 13 und 9,74 kg Aerosil^{®} OX 50 innerhalb von einer Stunde. Man rührt noch 1 Stunde bei 65 bis 70 °C weiter und destilliert dann im Vakuum das durch die Hydrolyse des Silans entstandene Methanol ab. Zuletzt wird der Ansatz auf Raumtemperatur abgekühlt.

### Beispiel 6

In einem Rührgefäß werden 15,78 kg EB 1290 und 7,43 kg DPGDA sowie 48 g 4-Hydroxyanisol vorgelegt und auf 65 bis 70 °C erwärmt. Zum erwärmten Acrylat werden eine Lösung von 0,15 kg Maleinsäureanhydrid in 1,364 kg Wasser sowie innerhalb von 30 Minuten 5,528 kg DYNASYLAN^{®} PTMO gegeben. Anschließend dosiert man im oben angegebenen Temperaturbereich unter intensiven Rühren 6,96 kg Plakor^{®} 13 und 9,74 kg Aerosil^{®} OX 50 innerhalb von einer Stunde. Man rührt noch 1 Stunde bei 65 bis 70 °C weiter und destilliert dann im Vakuum das durch die Hydrolyse des Silans entstandene Methanol ab. Zuletzt wird der Ansatz auf Raumtemperatur abgekühlt.

### Beispiel 7

In einem Rührgefäß werden 12,06 kg EB 1290 und 11,14 kg DPGDA sowie 48 g 4-Hydroxyanisol vorgelegt und auf 65 bis 70 °C erwärmt. Zum erwärmten Acrylat werden eine Lösung von 0,15 kg Maleinsäureanhydrid in 1,364 kg Wasser sowie innerhalb von 30 Minuten 4,988 kg DYNASYLAN^{®} VTMO gegeben. Anschließend dosiert man im oben angegebenen Temperaturbereich unter intensiven Rühren 6,96 kg Plakor^{®} 13 und 9,74 kg Aerosil^{®} OX 50 innerhalb von einer Stunde. Man rührt noch 1 Stunde bei 65 bis 70 °C weiter und destilliert dann im Vakuum das durch die Hydrolyse des Silans entstandene Methanol ab. Zuletzt wird der Ansatz auf Raumtemperatur abgekühlt.

### Beispiel 8

In einem Rührgefäß werden 15,776 kg EB1290, 7,425 kg DPGDA sowie 48 g 4-Hydroxyanisol vorgelegt und auf 65 bis 70 °C erwärmt. Zum erwärmten Acrylat werden eine Lösung von 0,15 kg Maleinsäureanhydrid in 1,3643 kg Wasser sowie innerhalb von 30 Minuten ein Gemisch von jeweils 2,494 kg DYNASYLAN^{®} VTMO und DYNASYLAN^{®} PTMO gegeben. Anschließend dosiert man im oben angegebenen Temperaturbereich unter intensivem Rühren 6,959 kg Plakor 12 und 9,742 kg AEROSIL^{®} OX50 innerhalb von einer Stunde. Man rührt noch 1 Stunde bei 65 bis 70 °C weiter. Zuletzt wird der Ansatz so schnell wie möglich auf Raumtemperatur abgekühlt.

### Vergleichsbeispiel A

In einem Rührgefäß werden 29,2 kg Sartomer^{®} SR 494 sowie 48 g 4-Hydroxyanisol vorgelegt und auf 65 bis 70 °C erwärmt. Zum erwärmten Acrylat werden eine Lösung von 0,15 kg Maleinsäureanhydrid in 0,525 kg Wasser sowie innerhalb von 30 Minuten 3,6 kg DYNASYLAN^{®} MEMO gegeben. Anschließend dosiert man im oben angegebenen Temperaturbereich unter intensiven Rühren 7,2 kg Aerosil^{®} 200 innerhalb von einer Stunde. Man rührt noch 3 Stunden bei 65 bis 70 °C weiter und destilliert dann im Vakuum das durch die Hydrolyse des Silans entstandene Methanol ab. Zuletzt wird der Ansatz auf Raumtemperatur abgekühlt.

### Vergleichsbeispiel B

In einem Rührgefäß werden 29,2 kg Sartomer^{®} SR 494 sowie 48 g 4-Hydroxyanisol vorgelegt und auf 65 bis 70 °C erwärmt. Zum erwärmten Acrylat werden eine Lösung von 0,15 kg Maleinsäureanhydrid in 0,597 kg Wasser sowie innerhalb von 30 Minuten 2,15 kg DYNASYLAN^{®} VTMO gegeben. Anschließend dosiert man im oben angegebenen Temperaturbereich unter intensiven Rühren 7,2 kg Aerosil^{®} 200 innerhalb von einer Stunde. Man rührt noch 1 Stunde bei 65 bis 70 °C weiter und destilliert dann im Vakuum das durch die Hydrolyse des Silans entstandene Methanol ab. Zuletzt wird der Ansatz auf Raumtemperatur abgekühlt.

### Vergleichsbeispiel C

In einem Rührgefäß werden 29,2 kg Sartomer^{®} SR 494 sowie 48 g 4-Hydroxyanisol vorgelegt und auf 65 bis 70 °C erwärmt. Zum erwärmten Acrylat werden eine Lösung von 0,15 kg Maleinsäureanhydrid in 0,597 kg Wasser sowie innerhalb von 30 Minuten 2,4 kg DYNASYLAN^{®} PTMO gegeben. Anschließend dosiert man im oben angegebenen Temperaturbereich unter intensiven Rühren 7,2 kg Aerosil^{®} 200 innerhalb von einer Stunde. Man rührt noch 1 Stunde bei 65 bis 70 °C weiter und destilliert dann im Vakuum das durch die Hydrolyse des Silans entstandene Methanol ab. Zuletzt wird der Ansatz auf Raumtemperatur abgekühlt.

### Vergleichsbeispiel D

In einem Rührgefäß werden 15,78 kg EB 1290 und 7,425 kg HDDA sowie 48 g 4-Hydroxyanisol vorgelegt und auf 65 bis 70 °C erwärmt. Zum erwärmten Acrylat werden eine Lösung von 0,15 kg Maleinsäureanhydrid in 0,8 kg Wasser sowie innerhalb von 30 Minuten 2,91 kg DYNASYLAN^{®} VTMO gegeben. Anschließend dosiert man im oben angegebenen Temperaturbereich unter intensiven Rühren 9,74 kg Aerosil^{®} OX 50 innerhalb von einer Stunde. Man rührt noch 1 Stunde bei 65 bis 70 °C weiter und destilliert dann im Vakuum das durch die Hydrolyse des Silans entstandene Methanol ab. Zuletzt wird der Ansatz auf Raumtemperatur abgekühlt.

### Vergleichsbeispiel E

In einem Rührgefäß werden 15,78 kg EB 1290 und 7,425 kg HDDA sowie 48 g 4-Hydroxyanisol vorgelegt und auf 65 bis 70 °C erwärmt. Zum erwärmten Acrylat werden eine Lösung von 0,15 kg Maleinsäureanhydrid in 0,8 kg Wasser sowie innerhalb von 30 Minuten 3,226 kg DYNASYLAN^{®} PTMO gegeben. Anschließend dosiert man im oben angegebenen Temperaturbereich unter intensiven Rühren 9,74 kg Aerosil^{®} OX 50 innerhalb von einer Stunde. Man rührt noch 1 Stunde bei 65 bis 70 °C weiter und destilliert dann im Vakuum das durch die Hydrolyse des Silans entstandene Methanol ab. Zuletzt wird der Ansatz auf Raumtemperatur abgekühlt.

### Anwendungsbeispiele

Die Lacke aus den Beispielen 1 bis 7 sowie den Vergleichsbeispielen A bis E wurden zur Bestimmung des Abriebs auf Dekorpapier mit einem Rakel der Spaltbreite 25 µm und zur Bestimmung der Ritzhärte auf quadratische PVC-Platten (Kantenlänge 10 cm, Dicke 2 mm) mit einem Rakel der Spaltbreite 50 µm aufgetragen und im Niederenergie-Elektronenbeschleuniger (140 keV) mit einer Dosis von 50 kGy ausgehärtet. Der Sauerstoff-Restgehalt im Beschleuniger betrug < 200 ppm.

Die Proben werden auf ihre Ritzhärte gemäß DIN 53 799 unter Einsatz einer Diamantspitze und einer Hartmetallkugel getestet. Ferner werden die Proben auf Abriebfestigkeit gemäß DIN 52 347 und ASTM D-1044 unter Verwendung von Schmirgelpapier S-42, 2 Reibräder bei 100 und 500 Umdrehungen und gemäß DIN 68 861 unter Verwendung von Schmirgelpapier S-42, 2 Reibräder CS-0 bei 50 und 1 000 Umdrehungen getestet. Die Versuchsergebnisse sind in Tabelle 1 zusammengestellt.

**Tabelle 1**

| | | | |
|---|---|---|---|
| Gegenüberstellung der Versuchsergebnisse aus den Beispielen 1 bis 8 und den Vergleichsbeispielen A bis E | | | |

| Probe | Ritzharte nach DIN 53 799 Diamant/Hartmetallkugel ¹⁾ [N] | Haze nach DIN 52347²⁾ und ASTM D-1044²⁾ 100 U/500 U [%] | Spezieller Taber-Abraser-Test nach DIN 68 861 50 U / 1 000 U [mg] |
|---|---|---|---|
| Beispiel 1 EB 5129/DPGDA, Plakor 13/OX 50, DYNASYLAN VTMO | 4,0/> 10³⁾ | ---⁴⁾ | 0,4/4,4 |
| Beispiel 2 | 4,0 / > 10³) | ---⁴⁾ | 0,4 / 4,1 |
| EB 1290/HDDA, Plakor 13/OX 50 DYNASYLAN VTMO | | | |
| Beispiel 3 | 3,0/> 10³⁾ | ---⁴⁾ | 0,7 / 8,1 |
| EB 1290/HDDA, Plakor 13/OX 50, DYNASYLAN VTMO | | | |
| Beispiel 4 | 3,0 / > 10³⁾ | ---⁴⁾ | 1,6 / 15,3 |
| EB 1290/HDDA, Plakor 13/OX 50 DYNASYLAN VTMO | | | |
| Beispiel 5 | 3,0 / > 10³⁾ | ----⁴⁾ | 0,5 / 6,1 |
| EB 1290/DPGDA, Plakor 13/OX 50, DYNASYLAN VTMO | | | |
| Beispiel 6 | 2,0/> 10³⁾ | ----⁴⁾ | 3,9/12,4 |
| EB 1290/DPGDA, Plakor 13/OX 50, DYNASYLAN PTMO | | | |
| Beispiel 7 | 3,0 / > 10³⁾ | ----⁴⁾ | 2,7/5,8 |
| EB 1290/DPGDA, Plakor 13/OX 50 DYNASYLAN VTMO | | | |
| Beispiel 8 | 3,0 / 8,5 | --- | 1,2/6,9 |
| EB 1290/DPGDA, Plakor 13/Aerosil OX 50 DYNASYLAN VTMO/PTMO | | | |
| Vergleichsbeispiel A | 1,5 / 9,0 | 3,3 / 14,4 | 21,1 / --- |
| SR 494/Aerosil 200 DYNASYLAN MEMO | | | |
| Vergleichsbeispiel B | 2,5/9,0 | 0,8/3,2 | 16,4/--- |
| SR 494/Aerosil 200 DYNASYLAN VTMO | | | |
| Vergleichsbeispiel C | 1,75 / 9,0 | 2,1 / 8,5 | 19,8 / --- |
| SR 494/Aerosil 200 DYNASYLAN PTMO | | | |
| Vergleichsbeispiel D | 3,0/> 10³) | --- | 14,8 / --- |
| EB 1290/HDDA Aerosil OX 50 DYNASYLAN VTMO | | | |
| Vergleichsbeispiel E | 3,0 / > 10³⁾ | --- | 19,2 / --- |
| EB 1290/HDDA, Aerosil OX 50, DYNASYLAN PTMO | | | |

| | | | |
|---|---|---|---|
| **Anmerkungen zu Tabelle 1:** ¹⁾ Durchmesser 1 mm ²⁾ Bestimmung der Abriebfestigkeit durch Lichtstreuung (Haze) nach 100 bzw. 500 Taber-Umdrehungen, 2 Reibräder CS-10, F=5,5±0,2 N, 3 Einzelmessungen, arithmetisches Mittel ³⁾ außerhalb des Meßbereiches von 10 N ⁴⁾ wegen einer Grundtrübung (Mikropartikel und agglomeriertes Aerosil) keine repräsentative Haze-Werte | | | |

## Patentansprüche

1. Siliciumorganische Nano-/Mikrohybridsysteme oder Mikrohybridsysteme, bestehend aus Kernen A,
wobei die Kerne A oxidische Partikel (KA-O) sind und ein Gemisch aus (a) mindestens einem nanoskaligen Oxid und/oder Mischoxid mindestens eines Metalls oder Halbmetalls der zweiten bis sechsten Hauptgruppe, der ersten bis achten Nebengruppe des Periodensystems der Elemente oder der Lanthanide mit einer mittleren Korngröße von 1 bis 200 nm und (b) einem mikroskaligen Korund mit einer mittleren Korngröße von 3 bis 40 µm darstellen und (a) und (b) in einem Gewichtsverhältnis von 1 : 10 bis 5 : 1 vorliegen,
und einer siliciumorganischen Umhüllung B,
wobei die siliciumorganische Umhüllung B mindestens einen siliciumorganischen Bestandteil der allgemeinen Formel Ia
(Si'O-)ₓSi-R (Ia),
worin Gruppen R gleich oder verschieden sind und R für eine lineare, verzweigte oder cyclische Alkylgruppe mit 1 bis 50 C-Atomen, für eine Alkenylgruppe mit 2 bis 6 C-Atomen, für eine Fluoralkyl-, Chloralkyl-, Isocyanoalkyl-, Cyanoalkyl-, Aryl-, Acylalkyl-, Acryloxyalkyl-, Methacryloxyalkyl-, Polysulfanalkyl-, Mercaptoalkyl-, Thiacyamidalkyl-, Glycidyloxyalkyl-, Aminoalkyl-, Diaminoalkyl-, Triaminoalkyl-, Carbonatoalkyl- bzw. für eine Ureidoalkyl-Gruppe steht und x eine Zahl von 0 bis 20 ist, wobei die noch freien Valenzen von Si durch SiO-und/oder -Z und die freien Valenzen von Si' durch SiO-, -R und/oder -Z gesättigt sind, die Gruppen Z gleich oder verschieden sind und Hydroxy-oder Alkoxy-Reste darstellen, und jedes Si bzw. Si' der Umhüllung B maximal eine Gruppe R trägt,
enthält und/oder der siliciumorganische Bestandteil der Umhüllung B über eine oder mehrere kovalente Bindungen der allgemeinen Formel Ib
(KA-O)-[(Si'O-)ₓ Si-R] (Ib)
worin Gruppen R gleich oder verschieden sind und R für eine lineare, verzweigte oder cyclische Alkylgruppe mit 1 bis 50 C-Atomen, für eine Alkenylgruppe mit 2 bis 6 C-Atomen, für eine Fluoralkyl-, Chloralkyl-, Isocyanoalkyl-, Cyanoalkyl-, Aryl-, Acylalkyl-, Acryloxyalkyl-, Methacryloxyalkyl-, Polysulfanalkyl-, Mercaptoalkyl-, Thiacyamidalkyl-, Glycidyloxyalkyl-, Aminoalkyl-, Diaminoalkyl-, Triaminoalkyl-, Carbonatoalkyl- bzw. für eine Ureidoalkyl-Gruppe steht und x eine Zahl von 0 bis 20 ist, wobei die noch freien Valenzen von Si durch (KA-O)-, SiO- und/oder -Z und die freien Valenzen von Si' durch (KA-O)-, SiO-, -R und/oder -Z gesättigt sind, die Gruppen Z gleich oder verschieden sind und Hydroxy- oder Alkoxy-Reste darstellen, und jedes Si bzw. Si' der Umhüllung B maximal eine Gruppe R trägt,
an einen Kern A (KA-O) gebunden ist.

2. Siliciumorganische Nano-/Mikrohybridsysteme oder Mikrohybridsysteme erhältlich durch eine Umsetzung von
(i) einem Oxidpartikelgemisch, das aus (a) mindestens einem nanoskaligen Oxid und/oder Mischoxid mindestens eines Metalls oder Halbmetalls der zweiten bis sechsten Hauptgruppe, der ersten bis achten Nebengruppe des Periodensystems der Elemente oder der Lanthanide mit einer mittleren Korngröße von 1 bis 200 nm und (b) einem mikroskaligen Korund mit einer mittleren Korngröße von 3 bis 40 µm besteht und (a) und (b) in einem Gewichtsverhältnis von 1 : 10 bis 5: 1 vorliegen,
mit
(ii) mindestens einem organofunktionellen Silan der allgemeinen Formel II
R¹SiY₃ (II),
worin R¹ eine lineare, verzweigte oder cyclische Alkylgruppe mit 1 bis 50 C-Atomen, eine Alkenylgruppe mit 2 bis 6 C-Atomen, eine Chloralkyl-, Isocyanoalkyl-, Cyanoalkyl-, Fluoralkyl-, Aryl-, Acylalkyl-, Acryloxyalkyl-, Methacryloxyalkyl-, Polysulfanalkyl-, Mercaptoalkyl-, Thiacyamidalkyl-, Glycidyloxyalkyl-, Aminoalkyl-, Diaminoalkyl-, Triaminoalkyl-, Carbonatoalkyl- oder eine Ureidoalkyl-Gruppe darstellt, Y für eine Methoxy-, Ethoxy-, i-Propoxy-, n-Propoxy- oder 2-Methoxyethoxy-Gruppe steht,
oder 3-Chlorpropyltrichlorsilan, 1,4-Bis(3-triethoxysilylpropyl)-tetrasulfan, 1,2-Bis(3-triethoxysilylpropyl)-disulfan, Bis(3-ethoxysilylpropyl)-amin oder Tris(3-alkoxysilylpropyl)-amin
und
(iii) gegebenenfalls einem monomeren und/oder oligomeren Kieselsäureester, der Methoxy-, Ethoxy-, n-Propoxy- oder i-Propoxygruppen trägt und einen mittleren Oligomerisierungsgrad von 1 bis 50 aufweist,
und
(iv) gegebenenfalls einem organofunktionellen Siloxan, dessen Funktionalitäten gleich oder verschieden sind und jedes Si-Atom im Siloxan eine Funktionalität aus der Reihe Alkyl, Fluoralkyl, Cyanoalkyl, Isocyanoalkyl, Alkenyl, Aminoalkyl, Diaminoalkyl, Triaminoalkyl, Alkoxyalkyl, Hydroxyalkyl, Acylalkyl, Glycidyloxyalkyl, Acryloxyalkyl, Methacryloxyalkyl, Mercaptoalkyl, Ureidoalkyl, Aryl oder Alkoxy trägt und die verbleibenden freien Valenzen der Si-Atome im Siloxan durch Methoxy- oder Ethoxy- oder Hydroxy-Gruppen gesättigt sind,
wobei die Umsetzung in situ in einem flüssigen, härtbaren Kunstharz oder einer Vorläuferstufe eines Kunstharzes erfolgt.

3. Nano-/Mikrohybridsysteme oder Mikrohybridsystem nach Anspruch 1 oder 2,
**dadurch gekennzeichnet,**
**dass** die Komponente (a) des Oxidpartikelgemischs mindestens ein nanoskaliges Oxid und/oder Mischoxid aus der Reihe der Elemente Si, Al, Ti und/oder Zr ist und eine mittlere Korngröße von 1 bis 200 nm aufweist.

4. Verfahren zur Herstellung einer siliciumorganische Nano-/Mikrohybridsysteme oder Mikrohybridsystem nach einem der Ansprüche 1 bis 3 enthaltende Zusammensetzung,
**dadurch gekennzeichnet,**
**dass** man
(i) ein Oxidpartikelgemisch, das aus (a) mindestens einem nanoskaligen Oxid und/oder Mischoxid mindestens eines Metalls oder Halbmetalls der zweiten bis sechsten Hauptgruppe, der ersten bis achten Nebengruppe des Periodensystems der Elemente oder der Lanthanide mit einer mittleren Korngröße von 1 bis 200 nm und (b) einem mikroskaligen Korund mit einer mittleren Korngröße von 3 bis 40 µm besteht und ein Gewichtsverhältnis von (a) : (b) von 1 : 10 bis 5 : 1 aufweist,
mit
(ii) mindestens einem organofunktionellen Silan der allgemeinen Formel II
R¹SiY₃ (II),
worin R¹ eine lineare, verzweigte oder cyclische Alkylgruppe mit 1 bis 50 C-Atomen, eine Alkenylgruppe mit 2 bis 6 C-Atomen, eine Chloralkyl-, Isocyanoalkyl-, Cyanoalkyl-, Fluoralkyl-, Aryl-, Acylalkyl-, Acryloxyalkyl-, Methacryloxyalkyl-, Polysulfanalkyl-, Mercaptoalkyl-, Thiacyamidalkyl-, Glycidyloxyalkyl-, Aminoalkyl-, Diaminoalkyl-, Triaminoalkyl-, Carbonatoalkyl- oder eine Ureidoalkyl-Gruppe darstellt, wobei die jeweilige Alkylen-Gruppe 1 bis 6 C-Atome enthält, Y eine Methoxy-, Ethoxy-, i-Propoxy-, n-Propoxy- oder 2-Methoxyethoxy-Gruppe darstellt,
oder 3-Chlorpropyltrichlorsilan, 1,4-Bis(3-triethoxysilylpropyl)-tetrasulfan, 1,2-Bis(3-triethoxysilylpropyl)-disulfan, Bis(3-ethoxysilylpropyl)-amin oder Tris(3-alkoxysilylpropyl)-amin
und
(iii) gegebenenfalls einem monomeren und/oder oligomeren Kieselsäureester, der Methoxy-, Ethoxy-, n-Propoxy- oder i-Propoxygruppen trägt und einen mittleren Oligomerisierungsgrad von 1 bis 50 aufweist,
und
(iv) gegebenenfalls einem organofunktionellen Siloxan, dessen Funktionalitäten gleich oder verschieden sind und jedes Si-Atom im Siloxan eine Funktionalität aus der Reihe Alkyl, Fluoralkyl, Cyanoalkyl, Isocyanoalkyl, Alkenyl, Aminoalkyl, Diaminoalkyl, Triaminoalkyl, Alkoxyalkyl, Hydroxyalkyl, Acylalkyl, Glycidyloxyalkyl, Acryloxyalkyl, Methacryloxyalkyl, Mercaptoalkyl, Ureidoalkyl, Aryl oder Alkoxy trägt und die verbleibenden freien Valenzen der Si-Atome im Siloxan durch Methoxy- oder Ethoxy- oder Hydroxy-Gruppen gesättigt sind,
in situ in einem flüssigen, härtbaren Kunstharz oder einer Vorläuferstufe eines Kunstharzes umsetzt.

5. Verfahren nach Anspruch 4,
**dadurch gekennzeichnet,**
**dass** man als härtbares Kunstharz oder Vorläuferstufe eines härtbaren Kunstharzes ein Acrylat, Methacrylat, Epoxid, Epoxidharz, Polyurethan, Polyurethanharz, ungesättigte Polyester, ungesättigtes Polyesterharz, Epoxyacrylat, Polyesteracrylat, Urethanacrylat, Siliconacrylate oder Gemische aus zwei oder mehreren der zuvor genannten Komponenten verwendet.

6. Verfahren nach einem der Ansprüche 4 oder 5,
**dadurch gekennzeichnet,**
**dass** man 0,1 bis 80 Gew.-% der oxidischen Komponente (i), bezogen auf das Kunstharz, einsetzt.

7. Verfahren nach einem der Ansprüche 4 bis 6,
**dadurch gekennzeichnet,**
**dass** man die oxidische Komponente (i) und mindestens eine silanbasierende Komponente (ii), (iii) und/oder (iv) in einem Gewichtsverhältnis von 100 : 1 bis 0,5 : 1 einsetzt.

8. Verfahren nach einem der Ansprüche 4 bis 7,
**dadurch gekennzeichnet,**
**dass** man die Umsetzung in Gegenwart eines Katalysators durchführt.

9. Verfahren nach einem der Ansprüche 4 bis 8,
**dadurch gekennzeichnet,**
**dass** man die Umsetzung in Gegenwart von Wasser durchführt.

10. Verfahren nach einem der Ansprüche 4 bis 9,
**dadurch gekennzeichnet,**
**dass** man die Umsetzung in Gegenwart eines Netzmittels durchführt.

11. Verfahren nach einem der Ansprüche 4 bis 10,
**dadurch gekennzeichnet,**
**dass** man die Umsetzung bei einer Temperatur im Bereich von 30 bis 100 °C durchführt.

12. Verfahren nach einem der Ansprüche 4 bis 11,
**dadurch gekennzeichnet,**
**dass** man
- das härtbare Kunstharz oder eine Vorläuferstufe eines härtbaren Kunstharzes vorlegt und erwärmt,
- Katalysator, gegebenenfalls Netzmittel und Wasser zugibt,
- Komponenten (ii) bis (iv) einbringt und anschließend
- die oxidische Komponente (i) unter guter Durchmischung zusetzt.

13. Verfahren nach einem der Ansprüche 4 bis 12,
**dadurch gekennzeichnet,**
**dass** man während der Umsetzung und/oder danach den entstandenen Alkohol aus dem Reaktionssystem entfernt.

14. Verfahren nach einem der Ansprüche 4 bis 13,
**dadurch gekennzeichnet,**
**dass** man als Komponente (ii) 3-Methacryloxypropyltrimethoxysilan, 3-Methacryloxypropyltriethoxysilan, 3-Methacryloxy-2-methyl-propyltrimethoxysilan, 3-Methacryloxy-2-methyl-propyltriethoxysilan, Vinyltrimethoxysilan, Vinyltriethoxysilan, n-Propyltrimethoxysilan und/oder n-Propyltriethoxysilan einsetzt.

15. Verfahren nach einem der Ansprüche 4 bis 14,
**dadurch gekennzeichnet,**
**dass** man als oxidische Komponente (i) ein Oxidpartikelgemisch, bestehend aus einer nanoskalige Kieselsäure (a) und einem mikroskaligen Korund (α-Al₂O₃) (b), einsetzt.

16. Verfahren nach einem der Ansprüche 12 bis 15,
**dadurch gekennzeichnet,**
**dass** man pro Mol Si der siliciumorganischen Komponente (ii) 0,5 bis 6 Mol Wasser einsetzt.

17. Zusammensetzung auf der Basis eines aushärtbaren Kunstharzes oder einer Vorläuferstufe eines härtbaren Kunstharzes erhältlich nach mindestens einem der Ansprüche 1 bis 16.

18. Verwendung einer Zusammensetzung, erhalten nach einem der Ansprüche 4 bis 17, als Lack oder als Basiskomponente für die Herstellung einer Beschichtungszusammensetzung oder eines Lacks zur Erzeugung kratz- und abriebfester Beschichtungen.

19. Verfahren zur Herstellung einer kratz- und abriebfesten Beschichtung,
**dadurch gekennzeichnet,**
**dass** man eine Zusammensetzung oder einen Lack, erhalten nach einem der Ansprüche 4 bis 18, auf ein Substrat aufbringt und radikalisch, thermisch und/oder photochemisch aushärtet.

20. Kratz- und abriebfeste Beschichtung, erhältlich durch Aufbringen und Aushärten einer Zusammensetzung auf ein Substrat nach Anspruch 18 oder 19.

21. Artikel mit einer kratzfesten und abriebfesten Beschichtung, erhältlich nach einem der Ansprüche 18 bis 20.

## Claims

1. Organosilicon nano/microhybrid systems or microhybrid systems composed of cores A,
the cores A being oxide particles (KA-O) and comprising a mixture of (a) at least one nanoscale oxide and/or mixed oxide of at least one metal or semimetal from main groups two to six or transition groups one to eight of the Periodic Table of the Elements, or of the lanthanides with an average particle size of from 1 to 200 nm, and (b) a microscale corundum with an average particle size of from 3 to 40 µm and (a) and (b) being present in a weight ratio of from 1:10 to 5:1,
and an organosilicon shell B,
the organosilicon shell B comprising at least one organosilicon constituent of the general formula Ia
(Si'O-)ₓSi-R (Ia)
in which groups R are identical or different and R is a linear, branched or cyclic alkyl group of 1 to 50 carbon atoms, an alkenyl group of 2 to 6 carbon atoms, or a fluoroalkyl, chloroalkyl, isocyanoalkyl, cyanoalkyl, aryl, acylalkyl, acryloyloxyalkyl, methacryloyloxyalkyl, polysulfanealkyl, mercaptoalkyl, thiacyamidoalkyl, glycidyloxyalkyl, aminoalkyl, diaminoalkyl, triaminoalkyl, carbonatoalkyl or ureidoalkyl group and x is a number from 0 to 20, the remaining free valences of Si being satisfied by SiO- and/or -Z and the free valences of Si' being satisfied by SiO-, -R and/or -Z, the groups Z are identical or different and are hydroxyl or alkoxy radicals, and each Si and Si' of the shell B carries not more than one group R,
and/or the organosilicon constituent of the shell B being attached via one or more covalent linkages of the general formula Ib
(KA-O)- [(Si'O-)ₓSi-R] (Ib)
in which groups R are identical or different and R is a linear, branched or cyclic alkyl group of 1 to 50 carbon atoms, an alkenyl group of 2 to 6 carbon atoms, or a fluoroalkyl, chloroalkyl, isocyanoalkyl, cyanoalkyl, aryl, acylalkyl, acryloyloxyalkyl, methacryloyloxyalkyl, polysulfanealkyl, mercaptoalkyl, thiacyamidoalkyl, glycidyloxyalkyl, aminoalkyl, diaminoalkyl, triaminoalkyl, carbonatoalkyl or ureidoalkyl group and x is a number from 0 to 20, the remaining free valences of Si being satisfied by (KA-O)-, SiO-and/or -Z and the free valences of Si' being satisfied by (KA-O)-, SiO-, -R and/or -Z, the groups Z are identical or different and are hydroxyl or alkoxy radicals, and each Si and Si' of the shell B carries not more than one group R,
to a core A (KA-O).

2. Organosilicon nano/microhybrid systems or microhybrid systems obtainable by reacting
(i) an oxide particle mixture composed of (a) at least one nanoscale oxide and/or mixed oxide of at least one metal or semimetal from main groups two to six or transition groups one to eight of the Periodic Table of the Elements, or of the lanthanides with an average particle size of from 1 to 200 nm, and (b) a microscale corundum with an average particle size of from 3 to 40 *µ*m and (a) and (b) being present in a weight ratio of from 1:10 to 5:1,
with
(ii) at least one organofunctional silane of the general formula II
R¹SiY₃ (II)
in which R¹ is a linear, branched or cyclic alkyl group of 1 to 50 carbon atoms, an alkenyl group of 2 to 6 carbon atoms or a chloroalkyl, isocyanoalkyl, cyanoalkyl, fluoroalkyl, aryl, acylalkyl, acryloyloxyalkyl, methacryloyloxyalkyl, polysulfanealkyl, mercaptoalkyl, thiacyamidoalkyl, glycidyloxyalkyl, aminoalkyl, diaminoalkyl, triaminoalkyl, carbonatoalkyl or ureidoalkyl group, Y is a methoxy, ethoxy, isopropoxy, n-propoxy or 2-methoxyethoxy group or 3-chloropropyltrichlorosilane, 1,4-bis(3-triethoxysilylpropyl)tetrasulfane, 1,2-bis(3-triethoxysilylpropyl)disulfane, bis(3-ethoxysilylpropyl)amine or tris(3-alkoxysilylpropyl)amine
and
(iii) if desired, a monomeric and/or oligomeric silicic ester which carries methoxy, ethoxy, n-propoxy or isopropoxy groups and has an average degree of oligomerization of from 1 to 50,
and
(iv) if desired, an organofunctional siloxane in which the functionalities are identical or different and each silicon atom in the siloxane carries a functionality from the group consisting of alkyl, fluoroalkyl, cyanoalkyl, isocyanoalkyl, alkenyl, aminoalkyl, diaminoalkyl, triaminoalkyl, alkoxyalkyl, hydroxyalkyl, acylalkyl, glycidyloxyalkyl, acryloyloxyalkyl, methacryloyloxyalkyl, mercaptoalkyl, ureidoalkyl, aryl and alkoxy, and the remaining free valences of the silicon atoms in the siloxane are satisfied by methoxy or ethoxy or hydroxyl groups,
in situ in a liquid, curable synthetic resin or synthetic resin precursor.

3. Nano/microhybrid systems or microhybrid system according to Claim 1 or 2, **characterized in that** component (a) of the oxide particle mixture is at least one nanoscale oxide and/or mixed oxide from the group consisting of the elements Si, A1, Ti and Zr and has an average particle size of from 1 to 200 nm.

4. Process for preparing a composition comprising an organosilicon nano/microhybrid system or microhybrid system according to any of Claims 1 to 3,
**characterized in that**
(i) an oxide particle mixture composed of (a) at least one nanoscale oxide and/or mixed oxide of at least one metal or semimetal from main groups two to six or transition groups one to eight of the Periodic Table of the Elements, or of the lanthanides with an average particle size of from 2 to 200 *µ*m , and (b) a microscale corundum with an average particle size of from 3 to 40 µm, and having a weight ratio of (a): (b) of from 1:10 to 5:1 is reacted
with
(ii) at least one organofunctional silane of the general formula II
R¹SiY₃ (II)
in which R¹ is a linear, branched or cyclic alkyl group of 1 to 50 carbon atoms, an alkenyl group of 2 to 6 carbon atoms or a chloroalkyl, isocyanoalkyl, cyanoalkyl, fluoroalkyl, aryl, acylalkyl, acryloyloxyalkyl, methacryloyloxyalkyl, polysulfanealkyl, mercaptoalkyl, thiacyamidoalkyl, glycidyloxyalkyl, aminoalkyl, diaminoalkyl, triaminoalkyl, carbonatoalkyl or ureidoalkyl group, the respective alkylene group comprising 1 to 6 carbon atoms, Y is a methoxy, ethoxy, isopropoxy, n-propoxy or 2-methoxyethoxy group, or 3-chloropropyltrichlorosilane, 1,4-bis-(3-triethoxysilylpropyl)tetrasulfane, 1,2-bis(3-triethoxysilylpropyl)disulfane, bis(3-ethoxysilylpropyl)amine or tris(3-alkoxy-silylpropyl)amine,
and
(iii)if desired, a monomeric and/or oligomeric silicic ester which carries methoxy, ethoxy, n-propoxy or isopropoxy groups and has an average degree of oligomerization of from 1 to 50,
and
(iv) if desired, an organofunctional siloxane in which the functionalities are identical or different and each silicon atom in the siloxane carries a functionality from the group consisting of alkyl, fluoroalkyl, cyanoalkyl, isocyanoalkyl, alkenyl, aminoalkyl, diaminoalkyl, triaminoalkyl, alkoxyalkyl, hydroxyalkyl, acylalkyl, glycidyloxyalkyl, acryloyloxyalkyl, methacryloyloxyalkyl, mercaptoalkyl, ureidoalkyl, aryl and alkoxy, and the remaining free valences of the silicon atoms in the siloxane are satisfied by methoxy or ethoxy or hydroxyl groups,
in situ in a liquid, curable synthetic resin or synthetic resin precursor.

5. Process according to Claim 4, **characterized in that** an acrylate, methacrylate, epoxide, epoxy resin, polyurethane, polyurethane resin, unsaturated polyester, unsaturated polyester resin, epoxy acrylate, polyester acrylate, urethane acrylate or silicone acrylate or a mixture of two or more of the aforementioned components is used as curable synthetic resin or precursor of a curable synthetic resin.

6. Process according to either of Claims 4 and 5, **characterized in that** from 0.1 to 80% by weight of the oxide component (i), based on the synthetic resin, is used.

7. Process according to any of Claims 4 to 6, **characterized in that** the oxide component (i) and at least one silane-based component (ii), (iii) and/or (iv) are used in a weight ratio of from 100:1 to 0.5:1.

8. Process according to any of Claims 4 to 7, **characterized in that** the reaction is conducted in the presence of a catalyst.

9. Process according to any of Claims 4 to 8, **characterized in that** the reaction is conducted in the presence of water.

10. Process according to any of Claims 4 to 9, **characterized in that** the reaction is conducted in the presence of a wetting agent.

11. Process according to any of Claims 4 to 10, **characterized in that** the reaction is conducted at a temperature in the range from 30 to 100°C.

12. Process according to any of Claims 4 to 11,
**characterized in that**
- the curable synthetic resin or a precursor of a curable synthetic resin is introduced initially and heated,
- catalyst, wetting agent if desired, and water are added,
- components (ii) to (iv) are introduced, and then
- the oxide component (i) is added with thorough mixing.

13. Process according to any of Claims 4 to 12, **characterized in that** during the reaction and/or subsequently the alcohol formed is removed from the reaction system.

14. Process according to any of Claims 4 to 13, **characterized in that** 3-methacryloyloxypropyltrimethoxysilane, 3-methacryloyloxypropyltriethoxysilane, 3-methacryloyloxy-2-methylpropyltrimethoxysilane, 3-methacryloyloxy-2-methylpropyltriethoxysilane, vinyltrimethoxysilane, vinyltriethoxysilane, n-propyltrimethoxysilane and/or n-propyltriethoxysilane are/is used as component (ii).

15. Process according to any of Claims 4 to 14, **characterized in that** an oxide particle mixture composed of a nanoscale silica (a) and a microscale corundum (α-Al₂O₃) (b) is used as oxide component (i).

16. Process according to any of Claims 12 to 15, **characterized in that** from 0.5 to 6 mol of water are used per mole of Si in the organosilicon component (ii) .

17. Composition based on a curable synthetic resin or a precursor of a curable synthetic resin, obtainable according to at least one of Claims 1 to 16.

18. Use of a composition obtained according to any of Claims 4 to 17 as a coating material or as a base component for preparing a coating composition or coating material for producing scratch and abrasion resistant coatings.

19. Method of producing a scratch and abrasion resistant coating, **characterized in that** a composition or coating material obtained according to any of Claims 4 to 18 is applied to a substrate and it is subjected to free-radical, thermal and/or photochemical curing.

20. Scratch and abrasion resistant coating obtainable by applying a composition to a substrate and curing it thereon, according to Claim 18 or 19.

21. Article having a scratch resistant and abrasion resistant coating, obtainable according to any of Claims 18 to 20.

## Revendications

1. Systèmes nano-microhybrides ou microhybrides organosiliciés, constitués par des noyaux A,
où les noyaux A sont des particules oxydes (KA-O) et représentent un mélange (a) d'au moins un oxyde et/ou un oxyde mixte d'une taille à l'échelle du nanomètre d'au moins un métal ou semi-métal du deuxième au sixième groupe principal, du premier au huitième groupe secondaire du système périodique des éléments ou des lanthanides, présentant une grosseur moyenne des particules de 1 à 200 nm et (b) d'au moins un corindon d'une taille à l'échelle du micron présentant une grosseur moyenne des particules de 3 à 40 *µ*m et (a) et (b) se trouvent dans un rapport pondéral de 1:10 à 5:1, et un enrobage organosilicié B,
où l'enrobage organosilicié B contient au moins un constituant organosilicié de formule générale Ia
(Si'O-)ₓSi-R (Ia),
dans laquelle les groupes R sont identiques ou différents et R représente un groupe alkyle linéaire, ramifié ou cyclique, comprenant 1 à 50 atomes de carbone, un groupe alcényle comprenant 2 à 6 atomes de carbone, un groupe fluoroalkyle, chloroalkyle, isocyanoalkyle, cyanoalkyle, aryle, acylalkyle, acryloxyalkyle, méthacryloxyalkyle, polysulfanalkyle, mercaptoalkyle, thiacyamidalkyle, glycidyloxyalkyle, aminoalkyle, diaminoalkyle, triaminoalkyle, carbonatoalkyle ou uréidoalkyle et x représente un nombre de 0 à 20, les valences encore libres du Si étant saturées par SiO- et/ou -Z et les valences libres de Si' étant saturées par SiO-, -R et/ou -Z, les groupes Z étant identiques ou différents et représentant des radicaux hydroxy ou alcoxy et chaque Si ou Si' de l'enrobage B portant au maximum un groupe R,
et/ou le constituant organosilicié de l'enrobage B est lié via une ou plusieurs liaisons covalentes de formule générale Ib
(KA-O)-[(Si'O-)ₓSi-R] (Ib)
dans laquelle les groupes R sont identiques ou différents et R représente un groupe alkyle linéaire, ramifié ou cyclique, comprenant 1 à 50 atomes de carbone, un groupe alcényle comprenant 2 à 6 atomes de carbone, un groupe fluoroalkyle, chloroalkyle, isocyanoalkyle, cyanoalkyle, aryle, acylalkyle, acryloxyalkyle, méthacryloxyalkyle, polysulfanalkyle, mercaptoalkyle, thiacyamidalkyle, glycidyloxyalkyle, aminoalkyle, diaminoalkyle, triaminoalkyle, carbonatoalkyle ou uréidoalkyle et x représente un nombre de 0 à 20, les valences encore libres du Si étant saturées par (KA-O)-, SiO- et/ou -Z et les valences libres de Si' étant saturées par (KA-O)-, SiO-, -R et/ou -Z, les groupes Z étant identiques ou différents et représentant des radicaux hydroxy ou alcoxy et chaque Si ou Si' de l'enrobage B portant au maximum un groupe R, à un noyau A (KA-O).

2. Systèmes nano-microhybrides ou microhybrides organosiliciés pouvant être obtenus par une transformation
(i) d'un mélange de particules oxydes qui est constitué par (a) au moins un oxyde et/ou un oxyde mixte d'une taille à l'échelle du nanomètre d'au moins un métal ou semi-métal du deuxième au sixième groupe principal, du premier au huitième groupe secondaire du système périodique des éléments ou des lanthanides présentant une grosseur moyenne des particules de 1 à 200 nm et (b) au moins un corindon d'une taille à l'échelle du micron présentant une grosseur moyenne des particules de 3 à 40 *µ*m et (a) et (b) se trouvant dans un rapport pondéral de 1:10 à 5:1, avec
(ii) au moins un silane organofonctionnel de formule générale II
R¹SiY₃ (II),
dans laquelle R1 représente un groupe alkyle linéaire, ramifié ou cyclique, comprenant 1 à 50 atomes de carbone, un groupe alcényle comprenant 2 à 6 atomes de carbone, un groupe chloroalkyle, isocyanoalkyle, cyanoalkyle, fluoroalkyle, aryle, acylalkyle, acryloxyalkyle, méthacryloxyalkyle, polysulfanalkyle, mercaptoalkyle, thiacyamidalkyle, glycidyloxyalkyle, aminoalkyle, diaminoalkyle, triaminoalkyle, carbonatoalkyle ou uréidoalkyle, Y représente un groupe méthoxy, éthoxy, i-propoxy, n-propoxy ou 2-méthoxyéthoxy,
ou du 3-chloropropyltrichlorosilane, du 1,4-bis(3-triéthoxysilylpropyl)-tétrasulfane, du 1,2-bis(3-triéthoxysilylpropyl)-disulfane, de la bis(3-éthoxysilylpropyl)-amine ou de la tris(3-alcoxysilylpropyl)-amine
et
(iii) le cas échéant un ester de silice monomère et/ou oligomère qui porte des groupes méthoxy, éthoxy, n-propoxy ou i-propoxy et qui présente un degré d'oligomérisation moyen de 1 à 50,
et
(iv) le cas échéant un siloxane organofonctionnel, dont les fonctionnalités sont identiques ou différentes et chaque atome de Si dans le siloxane porte une fonctionnalité de la série alkyle, fluoroalkyle, cyanoalkyle, isocyanoalkyle, alcényle, aminoalkyle, diaminoalkyle, triaminoalkyle, alcoxyalkyle, hydroxyalkyle, acylalkyle, glycidyloxyalkyle, acryloxyalkyle, méthacryloxyalkyle, mercaptoalkyle, uréidoalkyle, aryle ou alcoxy et les valences libres résiduelles des atomes de Si dans le siloxane sont saturées par des groupes méthoxy ou éthoxy ou hydroxy, la transformation ayant lieu in situ dans une résine synthétique liquide, durcissable ou un précurseur d'une résine synthétique.

3. Systèmes nano-microhybrides ou microhybrides selon la revendication 1 ou 2, **caractérisés en ce que** le composant (a) du mélange de particules oxydes présente au moins un oxyde et/ou oxyde mixte d'une taille à l'échelle du nanomètre de la série des éléments Si, Al, Ti et/ou Zr et présente une grosseur moyenne des particules de 1 à 200 nm.

4. Procédé pour la préparation d'une composition contenant des systèmes nano-microhybrides ou microhybrides organosiliciés selon l'une quelconque des revendications 1 à 3, **caractérisé en ce qu'**on transforme
(i) un mélange de particules oxydes qui est constitué par (a) au moins un oxyde et/ou un oxyde mixte d'une taille à l'échelle du nanomètre d'au moins un métal ou semi-métal du deuxième au sixième groupe principal, du premier au huitième groupe secondaire du système périodique des éléments ou des lanthanides présentant une grosseur moyenne des particules de 1 à 200 nm et (b) au moins un corindon d'une taille à l'échelle du micron présentant une grosseur moyenne des particules de 3 à 40 µm et qui présente un rapport pondéral de (a):(b) de 1:10 à 5:1,
avec
(ii) au moins un silane organofonctionnel de formule générale II
R¹SiY₃ (II),
dans laquelle R1 représente un groupe alkyle linéaire, ramifié ou cyclique, comprenant 1 à 50 atomes de carbone, un groupe alcényle comprenant 2 à 6 atomes de carbone, un groupe chloroalkyle, isocyanoalkyle, cyanoalkyle, fluoroalkyle, aryle, acylalkyle, acryloxyalkyle, méthacryloxyalkyle, polysulfanalkyle, mercaptoalkyle, thiacyamidalkyle, glycidyloxyalkyle, aminoalkyle, diaminoalkyle, triaminoalkyle, carbonatoalkyle ou uréidoalkyle, chaque groupe alkylène contenant 1 à 6 atomes de carbone, Y représente un groupe méthoxy, éthoxy, i-propoxy, n-propoxy ou 2-méthoxyéthoxy,
ou du 3-chloropropyltrichlorosilane, du 1,4-bis (3-triéthoxysilylpropyl)-tétrasulfane, du 1,2-bis (3-triéthoxysilylpropyl)-disulfane, de la bis(3-éthoxysilylpropyl)-amine ou de la tris(3-alcoxysilylpropyl)-amine
et
(iii) le cas échéant un ester de silice monomère et/ou oligomère qui porte des groupes méthoxy, éthoxy, n-propoxy ou i-propoxy et qui présente un degré d'oligomérisation moyen de 1 à 50,
et
(iv) le cas échéant un siloxane organofonctionnel, dont les fonctionnalités sont identiques ou différentes et chaque atome de Si dans le siloxane porte une fonctionnalité de la série alkyle, fluoroalkyle, cyanoalkyle, isocyanoalkyle, alcényle, aminoalkyle, diaminoalkyle, triaminoalkyle, alcoxyalkyle, hydroxyalkyle, acylalkyle, glycidyloxyalkyle, acryloxyalkyle, méthacryloxyalkyle, mercaptoalkyle, uréidoalkyle, aryle ou alcoxy et les valences libres résiduelles des atomes de Si dans le siloxane sont saturées par des groupes méthoxy ou éthoxy ou hydroxy, in situ dans une résine synthétique liquide, durcissable ou un précurseur d'une résine synthétique.

5. Procédé selon la revendication 4, **caractérisé en ce qu'**on utilise comme résine synthétique durcissable ou précurseur d'une résine synthétique durcissable, un acrylate, un méthacrylate, un époxyde, une résine époxyde, un polyuréthane, une résine polyuréthane, un polyester insaturé, une résine polyester insaturée, un époxyacrylate, un polyesteracrylate, un acrylate d'uréthane, un acrylate de silicone ou des mélanges de deux des composés susmentionnés ou plus.

6. Procédé selon l'une quelconque des revendications 4 ou 5, **caractérisé en ce qu'**on utilise 0,1 à 80% en poids du composant oxyde (i) par rapport à la résine synthétique.

7. Procédé selon l'une quelconque des revendications 4 à 6, **caractérisé en ce qu'**on utilise le composant oxyde (i) et au moins un composant à base de silane (ii), (iii) et/ou (iv) dans un rapport pondéral de 100:1 à 0,5:1.

8. Procédé selon l'une quelconque des revendications 4 à 7, **caractérisé en ce qu'**on réalise la transformation en présence d'un catalyseur.

9. Procédé selon l'une ou plusieurs des revendications 4 à 8, **caractérisé en ce qu'**on réalise la transformation en présence d'eau.

10. Procédé selon l'une quelconque des revendications 4 à 9, **caractérisé en ce qu'**on réalise la transformation en présence d'un agent mouillant.

11. Procédé selon l'une quelconque des revendications 4 à 10, **caractérisé en ce qu'**on réalise la transformation à une température dans la plage de 30 à 100°C.

12. Procédé selon l'une quelconque des revendications 4 à 11, **caractérisé en ce qu'**on
- dispose au préalable et chauffe la résine synthétique durcissable ou un précurseur d'une résine synthétique durcissable,
- ajoute le catalyseur, le cas échéant un mouillant et de l'eau,
- introduit les composants (ii) à (iv), puis
- ajoute le composant oxyde (i) en mélangeant intensivement.

13. Procédé selon l'une quelconque des revendications 4 à 12, **caractérisé en ce qu'**on élimine pendant la transformation et/ou après l'alcool formé du système de réaction.

14. Procédé selon l'une quelconque des revendications 4 à 13, **caractérisé en ce qu'**on utilise comme composant (ii) du 3-méthacryloxypropyltriméthoxysilane, du 3-méthacryloxypropyltriéthoxysilane, du 3-méthacryloxy-2-méthylpropyltriméthoxysilane, du 3-méthacryloxy-2-méthylpropyltriéthoxysilane, du vinyltriméthoxysilane, du vinyltriéthoxysilane, du n-propyltriméthoxysilane et/ou du n-propyltriéthoxysilane.

15. Procédé selon l'une quelconque des revendications 4 à 14, **caractérisé en ce qu'**on utilise comme composant oxyde (i) un mélange de particules oxydes, constitué par une silice d'une taille à l'échelle du nanomètre (a) et un corindon d'une taille à l'échelle du micron (α-Al₂O₃) (b).

16. Procédé selon l'une quelconque des revendications 12 ou 15, **caractérisé en ce qu'**on utilise par mole de Si du composé organosilicié (ii) 0,5 à 6 moles d'eau.

17. Composition à base d'une résine synthétique durcissable ou d'un précurseur d'une résine synthétique durcissable pouvant être obtenue selon l'une quelconque des revendications 1 à 16.

18. Utilisation d'une composition obtenue selon l'une quelconque des revendications 4 à 17, comme laque ou composant de base pour la préparation d'une composition de revêtement ou d'une laque pour la production de revêtements résistants aux griffes et à l'abrasion.

19. Procédé pour la préparation d'un revêtement résistant aux griffes et à l'abrasion, **caractérisé en ce qu'**on applique une composition ou une laque, obtenue selon l'une quelconque des revendications 4 à 18, sur un substrat et on la durcit par voie radicalaire, thermique et/ou photochimique.

20. Revêtement résistant aux griffes et à l'abrasion, pouvant être obtenu par application et durcissement d'une composition sur un substrat selon la revendication 18 ou 19.

21. Objet présentant un revêtement résistant aux griffes et à l'abrasion, pouvant être obtenu selon l'une quelconque des revendications 18 à 20.
